# EUROPÄISCHE PATENTSCHRIFT

(11) **EP 3 159 266 B1**
(45) Veröffentlichungstag und Bekanntmachung des Hinweises auf die Patenterteilung: **30.01.2019**
(21) Anmeldenummer: 15191318.3
(22) Anmeldetag: 23.10.2015
(51) Int. Cl.: B64D 25/14, B64D 45/00, B64D 47/02, G01C 9/00, B64C 1/14, G01C 19/00

(54) **ANZEIGEEINRICHTUNG ZUM ANZEIGEN EINES AKTIVIERUNGSSTATUS EINER NOTRUTSCHE IN EINEM FLUGZEUG**
DISPLAY DEVICE FOR DISPLAYING AN ACTIVATION STATUS OF AN ESCAPE SLIDE IN AN AIRCRAFT
DISPOSITIF D'AFFICHAGE DESTINE A AFFICHER UN ETAT D'ACTIVATION D'UN TOBOGGAN DANS UN AVION

(43) Veröffentlichungstag der Anmeldung: 26.04.2017
(73) Patentinhaber: Airbus Operations GmbH, 21129 Hamburg (DE)
(72) Erfinder: Heuer, Carsten, 21129 Hamburg (DE); Waigl, Ilja, 21129 Hamburg (DE)
(74) Vertreter: Bird & Bird LLP

(56) Entgegenhaltungen:
- EP-A1- 1 306 304
- EP-A1- 1 877 309
- EP-A1- 2 108 585
- EP-A1- 2 878 530
- EP-B1- 1 410 987
- DE-A1-102004 048 217
- US-A1- 2007 176 793

## Beschreibung

Die vorliegende Erfindung betrifft eine Anzeigeeinrichtung zum Anzeigen eines Aktivierungsstatus einer Notrutsche in einem Flugzeug sowie eine Türanordnung und ein Flugzeug mit einer solchen Anzeigeeinrichtung.

In größeren Passagierflugzeugen sind Flugzeugtüren mit einer Notrutschen¬aus¬löse-einrichtung koppelbar, so dass beim Öffnen der betreffenden Flugzeugtür eine daran angeordnete Notrutsche ausgelöst wird. Vor Abflug wird hierzu bei geschlossenen Türen ein Notrutschenentsicherungshebel in einen "armed"-Modus umgelegt, in dem sich die Notrutsche in einem aktivierten Zustand befindet, in dem das Öffnen der Flugzeugtür die Notrutsche auslöst. Nach normaler Landung wird der Notrutschenentsicherungshebel in einen "disarmed"-Modus umgelegt, so dass eine Kopplung mit der Notrutschenauslöse¬einrichtung aufgehoben wird und die Flugzeugtüren normal zu öffnen sind, ohne die Notrutsche auszulösen.

Eine derartige Notrutsche befindet sich normalerweise in einem eingefahrenen Zustand, in dem die Notrutsche in die Flugzeugtür integriert ist. Bei Auslösung der Notrutsche wird sie in einen ausgefahrenen Zustand ausgefahren, in dem sie nach außen von der Flugzeugtür vorsteht und schräg zwischen der Türöffnung und dem Boden verläuft, um es Passagieren zu ermöglichen, sicher den Boden zu erreichen.

Aus dem Dokument EP 2 878 530 A1 ist eine Anzeigeeinrichtung zum Anzeigen des Aktivierungsstatus der Notrutsche bekannt.

Da Notrutschen in Notfällen, wie insbesondere nach Landungen, zum Einsatz kommen, in denen das Flugzeug beschädigt sein kann, muss berücksichtigt werden, dass das Flugzeug zum Zeitpunkt des Einsatzes der Notrutsche sich nicht in seiner normalen waagerechten Lage befindet, sondern zum Beispiel in einer Lage, in der die Längsachse des Flugzeugs in Bezug auf den Boden geneigt ist bzw. schräg verläuft. Beispielsweise kann die Nase des Flugzeugs schräg nach oben verlaufen. In solchen Fällen kann der Abstand einer Flugzeugtür zum Boden größer sein als im Fall der normalen waagerechten Lage, so dass eine Notrutsche, die für den Fall der normalen waagerechten Lage ausgelegt ist, entweder den Boden gar nicht erreicht oder aber zu steil verläuft, um eine sichere Benutzung zu ermöglichen.

Aus diesem Grund ist es bekannt, dass Notrutschen - beispielsweise in Form eines wahlweise zusätzlich ausfahrbaren Verlängerungsstücks - in zwei unterschiedlichen Längen ausgefahren werden können, eine normale Länge, die einer waagerechten Lage des Flugzeugs entspricht, und einer vergrößerten Länge, die einer Lage des Flugzeugs entspricht, in der der Nickwinkel in Bezug auf die Waagerechte einen bestimmten Grenzwert überschreitet. Insbesondere werden dadurch sogenannte "Nose-up"-Situationen erfasst, in denen die Nase des Flugzeugs schräg nach oben weist. Um die dafür erforderliche Bestimmung des Nickwinkels vornehmen zu können, weist das Flugzeug mehrere Nickwinkelsensoren auf, die an einer zentralen Stelle im Flugzeug installiert und über Kabelverbindungen mit den Türsteuereinrichtungen bzw. Notrutschenauslöseeinrichtungen von einzelnen Türen verbunden sind. Die mit den Nickwinkelsensoren verbundenen Türsteuereinrichtungen bzw. Notrutschenauslöseeinrichtungen können dadurch bei der Auslösung der Notrutsche den aktuellen Nickwinkel berücksichtigen und die Ausfahrlänge der Notrutsche entsprechend steuern. Alternativ oder zusätzlich kann eine Warnung ausgegeben werden, dass die Notrutsche nicht benutzbar ist.

Diese Anordnung ist wenig flexibel und mit einem relativ hohen Aufwand verbunden, sowohl bei der Installation als auch bei der Wartung.

Es ist Aufgabe der Erfindung, eine einfache und flexibel anwendbare Lösung bereitzustellen, mit der zuverlässig eine Steuerung der Ausfahrlänge einer Notrutsche durch eine Notrutschenauslöseeinrichtung eines Flugzeugs ermöglicht werden kann, sowie eine Türanordnung und ein Flugzeug bereitzustellen, die diese Lösung implementieren.

Diese Aufgabe wird durch eine Anzeigeeinrichtung mit den Merkmalen des Anspruchs 1, eine Türanordnung mit den Merkmalen des Anspruchs 14 und ein Flugzeug mit den Merkmalen des Anspruchs 15 gelöst.

Um den Aktivierungsstatus einer Notrutsche in einem Flugzeug anzeigen zu können, sind in oder an den zugehörigen Flugzeugtüren üblicherweise entsprechende Anzeigeeinrichtungen installiert, die zumindest den aktivierten Zustand der Notrutsche dauerhaft oder bei Gefahr einer Türöffnung optisch und/oder akustisch signalisieren.

Nach der vorliegenden Erfindung ist eine Anzeigeeinrichtung zum Anzeigen eines Aktivierungsstatus einer Notrutsche in einem Flugzeug vorgesehen, die eine optische Signaleinrichtung zum Abgeben eines optischen Signals und/oder eine akustische Signaleinrichtung zum Abgeben eines akustischen Signals aufweist. Zum Erzeugen des optischen Signals kann bei der optischen Signaleinrichtung beliebige Anzeigeeinrichtungen Verwendung finden, die insbesondere selektiv ein Lichtsignal generieren, beispielsweise durch eine Leuchteinrichtung auf Basis einer Glühlampe, einer LED oder einer Mehrzahl hiervon. Die Leuchteinrichtung kann dafür eingerichtet sein, ein kontinuierliches Licht oder ein Blinklicht abzugeben, wobei die optische Wahrnehmbarkeit eines Blinklichts diejenige eines kontinuierlichen Lichts übertreffen kann. Die akustische Signaleinrichtung kann analog hierzu eine Tonerzeugungseinheit aufweisen, mit der ein akustisch wahrnehmbares Signal erzeugt werden kann. Die Tonerzeugungseinrichtung kann für diesen Zweck einen elektromagnetisch oder piezoelektrisch betreibbaren Lautsprecher oder Summer aufweisen und, falls erforderlich bzw. gewünscht, eine Einrichtung zum selektiven Abgeben einer Signalfolge zum Wiedergeben eines aufgezeichneten oder synthetischen Klangs.

Außerdem weist die Anzeigeeinrichtung einen Statussignaleingang zum Empfang eines vorbestimmten Statussignals auf, das den Aktivierungszustand einer Notrutsche kennzeichnet. Der Statussignaleingang kann zum Beispiel einen Anschluss zur Verbindung mit einem Kabel aufweisen, über das das Statussignal drahtgebunden an die Anzeigeeinrichtung geliefert wird, oder aber auch eine Empfangseinrichtung zum drahtlosen Empfang des Statussignals. In jedem Fall weist das Statussignal einen ersten Signalzustand auf, der einem aktivierten Zustand der Notrutsche zugeordnet ist, und einen zweiten Signalzustand, der einem deaktivierten Zustand der Notrutsche zugeordnet ist. Das Statussignal kann im Betrieb der Anzeigeeinrichtung zum Beispiel durch eine Notrutschenauslöseeinrichtung, eine Türsteuereinrichtung oder einen separaten Detektor geliefert werden, der beispielsweise die Stellung eines Notrutschenaktivierungshebels erfasst.

Die Anzeigeeinrichtung weist außerdem eine Steuereinrichtung auf, die mit der optischen Signaleinrichtung bzw. der akustischen Signaleinrichtung und dem Statussignaleingang verbunden und dazu eingerichtet ist, um in Abhängigkeit von dem über den Statussignaleingang empfangenen Statussignal die optische Signaleinrichtung bzw. die akustische Signaleinrichtung zu betreiben, um den Signalzustand des Statussignals anzuzeigen. Aufgrund der Zuordnung der Signalzustände des Statussignals zum Aktivierungszustand einer Notrutsche kann damit dann entsprechend der Aktivierungszustand der Notrutsche angezeigt werden, die der Vorrichtung zugeordnet ist, die das Statussignal liefert. In diesem Zusammenhang ist es möglich, dass dauerhaft beide Signalzustände angezeigt werden, dauerhaft nur der erste Signalzustand angezeigt wird oder aber der erste Signalzustand - und optional der zweite Signalzustand - nur bei Vorliegen weiterer Bedingungen angezeigt wird, wie weiter unten im Detail erläutert wird. Die Steuereinrichtung kann zum Beispiel in Form einer Elektronikeinheit oder als Teil einer Elektronikeinheit vorgesehen sein.

Die Anzeigeeinrichtung ist als eine zusammenhängende, kompakte Baueinheit ausgebildet, die an einer Tür bzw. einem Türblatt einer Flugzeugtür angeordnet bzw. befestigt werden kann bzw. die insbesondere in eine Türverkleidung einer Flugzeugtür integrierbar ist. Mit anderen Worten bilden die optische Signaleinrichtung, die akustische Signaleinrichtung, der Statussignaleingang und die Steuereinrichtung - und die weiteren nachfolgend genannten Komponenten der Anzeigeeinrichtung sowie ggf. noch weitere Komponenten - eine derartige zusammenhängende, kompakte Baueinheit aus. Eine solche Anzeigeeinrichtung ist besonders zuverlässig und leicht nachrüstbar, und es sind keine größeren Modifikationen innerhalb des betreffenden Flugzeugs und insbesondere an einer Tür erforderlich. Die zusammenhängende Baueinheit kann bevorzugt ein Gehäuse mit einem Befestigungsbereich und einer Sichtseite aufweisen. Der Befestigungsbereich ist angepasst, um eine mechanische Verbindung mit der Türverkleidung oder einem Befestigungsmittel an der Flugzeugtür einzugehen. Wenn die Anzeigeeinrichtung eine optische Signaleinrichtung aufweist, ist es dabei bevorzugt, wenn das Gehäuse zumindest teilweise in einem die optische Signaleinrichtung beherbergenden Abschnitt transparent ist. Die Gehäuseform muss sich daher nicht von der einer herkömmlichen Warnlampe unterscheiden und die darin integrierten Komponenten sind vor äußeren Einwirkungen weitgehend geschützt, wobei die Sichtbarkeit der optischen Signaleinrichtung gewährleistet bleibt. Ganz unabhängig davon ist es allgemein bevorzugt, wenn die zusammenhängende Baueinheit ein Gehäuse aufweist, in dem und/oder an dem alle ihre Komponenten angeordnet sind.

Die Anzeigeeinrichtung weist ferner eine mit der Steuereinrichtung verbundene Neigungswinkel-Messeinrichtung zur Bestimmung des Neigungswinkels der Anzeigeeinrichtung um eine vorbestimmte Achse und einen Neigungswinkel-Signalausgang auf. Bei entsprechendem Einbau der Anzeigeeinrichtung in ein Flugzeug in der Weise, dass die vorbestimmte Achse entlang der Nickachse des Flugzeugs verläuft, entspricht der bestimmte Neigungswinkel dem Nickwinkel des Flugzeugs. Wie weiter unten erläutert wird, kann die Neigungswinkel-Messeinrichtung zur Bestimmung des Neigungswinkels um die vorbestimmte Achse zum Beispiel einen oder mehrere Inertialsensoren aufweisen, insbesondere einen oder mehrere Beschleunigungssensoren oder einen Drehratensensor.

Die Steuereinrichtung ist ferner in der Weise angepasst, dass sie im Betrieb auf Basis des von der Neigungswinkel-Messeinrichtung bestimmten Neigungswinkel bestimmt, ob ein vorbestimmter Neigungswinkel von beispielsweise 2°, bevorzugt 2,5° und mehr bevorzugt 3° oder beispielsweise -2°, bevorzugt -2,5° und mehr bevorzugt -3° um die vorbestimmte Achse für einen vorbestimmten Zeitraum überschritten worden ist, und über den Neigungswinkel-Signalausgang nur dann ein vorbestimmtes Ausgangssignal abgibt, wenn der vorbestimmte Neigungswinkel mindestens für den vorbestimmten Zeitraum überschritten worden ist. Das vorbestimmte Ausgangssignal kennzeichnet daher die Überschreitung des vorbestimmten Neigungswinkels für den vorbestimmten Zeitraum. Der vorbestimmte Zeitraum kann so gewählt werden, dass Fehlmessungen vermieden werden, indem kurzzeitige Schwankungen des Messwerts nicht zur Abgabe des vorbestimmten Ausgangssignals führen. Die Steuereinrichtung kann so eingerichtet sein, dass zu Zeiten, zu denen das vorbestimmte Ausgangssignal nicht abgegeben wird, d.h. der vorbestimmte Neigungswinkel nicht mindestens für den vorbestimmten Zeitraum überschritten worden ist, ein anderes Ausgangssignal oder gar keine Ausgangssignal über den Neigungswinkel-Signalausgang abgegeben wird. Das vorbestimmte Ausgangssignal kann an eine Notrutschen-Steuervorrichtung bzw. Notrutschen-Auslösevorrichtung gesandt und von dieser dazu verwendet werden, um die Ausfahrlänge der Notrutsche zu steuern.

Der Neigungswinkel-Signalausgang kann zum Beispiel einen externen Anschluss der Anzeigeeinrichtung zur Verbindung mit einem Kabel aufweisen, über das das vorbestimmte Ausgangssignal drahtgebunden an eine Notrutschen-Steuervorrichtung bzw. Notrutschen-Auslösevorrichtung geliefert wird, oder aber auch eine Sendeeinrichtung zur drahtlosen Übertragung des vorbestimmten Ausgangssignals. Dann kann in der erwähnten Weise die Ausfahrlänge der Notrutsche gesteuert werden. Der Neigungswinkel-Signalausgang kann alternativ oder zusätzlich einen internen Ausgang innerhalb der Ansteuereinrichtung aufweisen, der mit der optischen Signaleinrichtung und/oder der akustischen Signaleinrichtung verbunden ist. Dann ist die optische Signaleinrichtung bzw. die akustische Signaleinrichtung angepasst, um bei Empfang des vorbestimmten Ausgangssignals ein vorbestimmtes optisches Signal bzw. ein vorbestimmtes akustisches Signal abzugeben. Durch diese Ausgestaltung kann eine optische und/oder akustische Warnung bereitgestellt werden, wenn sich die Lage des Flugzeugs während einer Evakuierung ändert und die Notrutsche dadurch nicht mehr benutzbar ist.

Es hat sich im Rahmen der vorliegenden Erfindung herausgestellt, dass gerade durch die Integration der Neigungswinkelmessung und die Auswertung des Neigungswinkels in eine Anzeigeeinrichtung zum Anzeigen eines Aktivierungsstatus einer Notrutsche große Vorteile erzielt werden können. So ist mit dieser Lösung ein sehr geringer Installationsaufwand verbunden, da keine zentrale Installation von Nickwinkelsensoren erforderlich ist und stattdessen lediglich die Anzeigeeinrichtung individuell und gezielt an jeder mit einer Notrutsche versehenen Tür installiert werden muss, an der eine Steuerung der Ausfahrlänge der Notrutsche auf Basis des Nickwinkels des Flugzeugs gewünscht ist und/oder an der eine Warnung gewünscht ist, dass die Notrutsche nicht benutzbar ist. Die betreffenden Türen können als fertige Komponente geliefert werden, ohne dass weiterer Installationsaufwand bei der Endfertigung erforderlich ist. Ferner wird ein modularer Ansatz bereitgestellt, der es flexibel und sehr einfach ermöglicht, diese Funktion wahlweise in jeder Tür bereitzustellen. Dadurch kann auch eine Gewichtsreduktion erzielt werden, da nicht mehr jede Tür auf die Ansteuerung auf Basis eines Nickwinkels vorbereitet sein muss und beispielsweise keine Notstromversorgung für diese Funktionalität aufweisen muss.

Durch die Ausführung der Anzeigeeinrichtung als eine kompakte Baueinheit, welche in eine Türverkleidung des Flugzeugs integrierbar ist oder an einer Flugzeugtür angeordnet bzw. befestigt werden kann, kann in vorteilhafter Weise ohne Weiteres eine herkömmliche Warnlampe für eine Notrutschenaktivierung durch die erfindungsgemäße Anzeigeeinrichtung ersetzt werden. Die Anzeigeeinrichtung ist bevorzugt derart zu gestalten, dass sie zumindest in einem für die Befestigung notwendigen Bereich wie eine herkömmliche Warnleuchte gestaltet ist, so dass die Türverkleidung und ein entsprechender Ausschnitt oder ein daran angeordnetes Befestigungsmittel nicht modifiziert werden müssen. Die erfindungsgemäße Anzeigeeinrichtung weist somit ein sehr großes Potenzial für eine Nachrüstlösung (Retrofit) auf, denn es müsste lediglich eine herkömmliche Warnleuchte durch die erfindungsgemäße Anzeigeeinrichtung ersetzt werden.

In einer bevorzugten Ausführungsform ist die Neigungswinkel-Messeinrichtung eine Inertialmesseinheit mit mindestens einem Inertialsensor, wie zum Beispiel mindestens einem Gyrosensor oder Beschleunigungssensor, zum kontinuierlichen oder periodischen Erfassen mindestens einer gerichteten Beschleunigung. Es ist dabei möglich, dass die Neigungswinkel-Messeinrichtung nicht selbst den Neigungswinkel bestimmt, sondern ein Messsignal liefert, auf Basis dessen die Steuereinrichtung den Neigungswinkel bestimmten kann. Außerdem ist es möglich, dass einer von dem mindestens einen Inertialsensor angepasst ist, um die Drehbeschleunigung um die vorbestimmte Achse zu erfassen, und/oder dass der mindestens eine Inertialsensor drei Inertialsensoren umfasst, von denen jeder angepasst ist, um die Beschleunigung entlang einer anderen von drei unterschiedlichen Raumrichtungen zu erfassen. Insgesamt kann die Inertialmesseinheit eine Beschleunigungsmesseinheit mit mindestens einem G-Sensor, d.h. einem Akzelerometer bzw. einem Beschleunigungssensor, sein. Ein G-Sensor kann dabei bevorzugt die Beschleunigung entlang dreier Raumachsen messen und basiert bevorzugt auf MEMS-Technologie. Ein Inertialsensor könnte sowohl eine Beschleunigung entlang einer von drei Raumachsen als auch eine Drehbeschleunigung um eine von drei Raumachsen erfassen. Es bietet sich besonders an, Drei- bzw. Sechs-Achs-Sensoren einzusetzen, die sowohl statische Lagen, als auch dynamische Lageänderungen erfassen können und etwa mit je einem Drei-Achs-Drehraten- und Drei-Achs-Beschleunigungssensor auf einem Chip realisiert sind. Solche Sensoren bzw. Sensoranordnungen sind kommerziell erhältlich und bevorzugt standardisiert.

In einer bevorzugten Ausführungsform ist die Steuereinrichtung so eingerichtet, dass der vorgestimmte Neigungswinkel und/oder der vorbestimmte Zeitraum einstellbar sind. Auf diese Weise ist in einfacher Weise eine flexible Anpassung an verschiedene Türen und Flugzeuge und die Lage der Türen im Flugzeug möglich.

In einer bevorzugten Ausführungsform weist die Anzeigeeinrichtung ferner einen Energieversorgungsanschluss zur Verbindung mit einer externen Energieversorgung, wie insbesondere einem Bord-Energieversorgungsnetz eines Flugzeugs, und einen wiederaufladbaren Energiespeicher auf, der so angeordnet ist, dass er bei Betrieb der Anzeigevorrichtung, während dessen der Energieversorgungsanschluss mit der externen Energieversorgung verbunden ist, mit über den Energieversorgungsanschluss empfangener Energie aufgeladen wird und bei Ausfall der externen Energieversorgung zumindest die Steuereinrichtung und die Neigungswinkel-Messeinrichtung betreibt. Auch wenn es alternativ möglich ist, dass die Anzeigeeinrichtung für ihren Betrieb eine eigene unabhängige Energieversorgung, wie insbesondere eine aufladbare oder nicht aufladbare Batterie, aufweist, hat die Ausgestaltung mit einem Energieversorgungsanschluss zur Verbindung mit einer externen Energieversorgung und einem wiederaufladbaren Energiespeicher, wie zum Beispiel einer wiederaufladbaren Batterie oder einem Kondensator, den Vorteil, dass Gewicht eingespart werden kann. Durch die Integration des wiederaufladbaren Energiespeichers in die Anzeigeeinrichtung müssen die Türsteuereinrichtungen bzw. die Notrutschenauslöseeinrichtungen, die mit eigenen wiederaufladbaren Energiespeichern für den Notbetrieb ausgestattet sind, nicht mehr so ausgelegt sein, dass sie auch noch Energie für den Notbetrieb der Funktionalität zur Steuerung der Ausfahrlänge der Notrutsche bereitstellen müssen. Dadurch kann der wiederaufladbare Energiespeicher Türsteuereinrichtungen bzw. die Notrutschenauslöseeinrichtungen kleiner gewählt und eine erfindungsgemäße Anzeigeeinrichtung nur an ausgewählten Türen installiert werden, so dass insgesamt eine Gewichtsreduktion erzielt wird.

In einer bevorzugten Ausführungsform ist die Steuereinrichtung ferner angepasst, um die Neigungswinkel-Messeinrichtung bei jedem Wechsel des an dem Statussignaleingang empfangenen Statussignals von dem zweiten Signalzustand in den ersten Signalzustand und/oder von dem ersten Signalzustand in den zweiten Signalzustand auf einen Neigungswinkel um die vorbestimmte Achse von Null Grad zu kalibrieren. Neigungswinkel-Messeinrichtungen müssen aufgrund einer inhärenten Drift der verwendeten Sensoren, wie zum Beispiel G-Sensoren, regelmäßig kalibriert werden. Durch diese Ausführungsform wird dies in besonders einfacher Weise automatisch bewerkstelligt. Dabei wird davon ausgegangen, dass sich das Flugzeug vor dem Start und nach der Landung auf einer waagerechten Oberfläche befindet und daher in seiner normalen waagerechten Lage. Der Wechsel zwischen dem ersten und zweiten Signalzustand findet jedes Mal statt, wenn die Notrutsche aktiviert oder deaktiviert wird, d.h. vor jedem Start und nach jeder normalen Landung. Somit weist die Anzeigeeinrichtung in dieser Ausführungsform eine Selbstkalibrierungsfunktion auf, die regelmäßig vor jedem Start und/oder nach jeder normalen Landung durchgeführt wird.

In einer bevorzugten Ausführungsform ist die Anzeigeeinrichtung ferner zum Anzeigen eines nicht autorisierten Öffnens einer Tür eines am Boden geparkten Flugzeugs angepasst. Aus Sicherheitsgründen werden üblicherweise alle von außen zugänglichen Türen eines am Boden geparkten Flugzeugs mit aufklebbaren Sicherheitssiegeln versiegelt, bevor das Flugzeug unbeaufsichtigt zurückgelassen wird. Die Sicherheitssiegel sind in der Weise ausgestaltet und werden in der Weise angewendet, dass die Türen nicht geöffnet werden können, ohne die Sicherheitssiegel zu zerstören oder zumindest irreversibel zu beschädigen, so dass ein fehlendes oder beschädigtes Sicherheitssiegel anzeigt, dass während der Abwesenheit von autorisierten Personen ein nicht autorisierter Zugang zum Flugzeug stattgefunden hat oder versucht worden ist. In einem solchen Fall verlangen die typischen Sicherheitsvorkehrungen eine vollständige Untersuchung des Flugzeugs, d.h. das gesamte Flugzeug muss durch Sicherheitspersonal auf mögliche Eindringlinge und gefährliche Gegenstände hin durchsucht werden. Die Sicherheitssiegel sind jedoch aufwändig in der Anwendung, da sie von einer Person manuell aufgeklebt, untersucht und rückstandsfrei entfernt werden müssen. Außerdem ist ihre Verwendung mit Fehlalarmen verbunden, da sie gegenüber Feuchtigkeit und Schmutz empfindlich sind und abfallen können und da sie auch ohne nicht autorisierte Öffnung einer Tür durch relative thermische Ausdehnung zwischen Tür und Flugzeugrumpf beschädigt werden können. Ferner können Sicherheitssiegel gefälscht werden oder in den Besitz nicht autorisierter Personen gelangen, und sie müssen fortlaufend nachgekauft werden, da sie nur zur einmaligen Verwendung vorgesehen sind.

In dieser Ausführungsform, in der die Anzeigeeinrichtung auch zum Anzeigen eines nicht autorisierten Öffnens einer Tür eines am Boden geparkten, insbesondere unbeaufsichtigten, Flugzeugs angepasst ist, weist die Anzeigeeinrichtung außerdem einen Sensor zum Erfassen eines Abstands zwischen dem Sensor und einem in einem Erfassungsbereich von zum Beispiel zwei bis fünf Meter vor dem Sensor befindlichen Objekt auf. Wie weiter unter ausführlich erläutert wird, ist nach Anordnung des Sensors oder der gesamten Anzeigeeinrichtung an einer Tür eines Flugzeugs ein solches Objekt insbesondere ein fester Bestandteil des Flugzeugs, der eine statische Referenzposition in Bezug auf den Sensor hat. Wie gleichfalls weiter unten ausführlich erläutert wird, können weitere solche Objekte auch insbesondere Personen sein, die sich der Tür nähern.

Ferner weist die Anzeigeeinrichtung in dieser Ausführungsform eine Signalisierungseinrichtung, die einen ersten Zustand und einen zweiten Zustand hat, und eine mit der Signalisierungseinrichtung gekoppelte Reseteinrichtung bzw. Rücksetzeinrichtung auf, die dazu eingereicht ist, bei Vornahme einer vorbestimmten Resetoperation bzw. Rücksetzoperation durch einen Benutzer die Signalisierungseinrichtung in den ersten Zustand zu versetzen. Die Reseteinrichtung kann Teil der Signalisierungseinrichtung sein oder als separate Komponente ausgebildet sein. Außerdem weist die Anzeigeeinrichtung eine Aktivierungseinrichtung auf, die dazu eingerichtet ist, als Ausgangssignal wahlweise ein vorbestimmtes Deaktivierungssignal und ein vorbestimmtes erstes Aktivierungssignal bereitzustellen. Beispielsweise kann die Aktivierungseinrichtung so ausgestaltet sein, dass die Bereitstellung des Deaktivierungssignals bzw. des ersten Aktivierungssignals gezielt durch Vornahme einer vorbestimmten Deaktivierungsoperation bzw. einer vorbestimmten ersten Aktivierungsoperation an der Aktivierungseinrichtung oder einer separaten Komponente der Anzeigeeinrichtung oder einer separaten Vorrichtung durch einen Benutzer ausgelöst werden.

Schließlich ist die Steuereinrichtung in dieser Ausführungsform mit dem Sensor, der Signalisierungseinrichtung und der Aktivierungseinrichtung gekoppelt. Dadurch kann sie Signale von dem Sensor und der Aktivierungseinrichtung empfangen und Steuersignale an die Signalisierungseinrichtung abgeben. Die Steuereinrichtung ist angepasst, um bei Empfang des Deaktivierungssignals von der Aktivierungseinrichtung in eine erste Betriebsart zu wechseln und bei Empfang des ersten Aktivierungssignals von der Aktivierungseinrichtung in eine zweite Betriebsart zu wechseln. Der Wechsel in die erste Betriebsart bzw. in die zweite Betriebsart kann bevorzugt durch eine optische oder akustische Signalisierung oder durch unterschiedliche optische oder akustische Signalisierungen mit Hilfe einer optionalen geeigneten optischen oder akustischen Signaleinrichtung bestätigt werden, auf die später noch ausführlicher eingegangen wird.

Die Steuereinrichtung ist dabei in der Weise angepasst, dass sie in der zweiten Betriebsart, die im Gegensatz zu der ersten Betriebsart, in der das Öffnen einer Tür nicht überwacht wird, eine Überwachungsbetriebsart ist, in der das Öffnen einer Tür in der nachfolgend beschriebenen Weise überwacht wird, auf Basis eines von dem Sensor gelieferten Sensorsignals, das für den Abstand zwischen dem Sensor und dem bzw. einem Objekt charakteristisch ist, eine Änderung des Abstands zwischen dem Sensor und dem Objekt detektiert und bei Detektion einer Änderung des Abstands die Signalisierungseinrichtung bis zur Vornahme der vorbestimmten Resetoperation in den zweiten Zustand versetzt, insbesondere durch Erzeugung eines entsprechenden Steuersignals, das an die Signalisierungseinrichtung geliefert wird und auf das die Signalisierungseinrichtung entsprechend reagiert. Da die Signalisierungseinrichtung bis zur Vornahme der vorbestimmten Resetoperaton in den zweiten Zustand versetzt wird, kann der erste Zustand nicht mehr durch Herstellung des ursprünglichen oder eines bestimmten Abstands, wie zum Beispiel durch Schließen der Tür, hergestellt werden. In diesem Zusammenhang kann vorgesehen werden, dass die Steuereinrichtung bei Detektion jeder Änderung das Versetzen in den zweiten Zustand bewirkt. Es ist jedoch bevorzugt, wenn die Steuereinrichtung so angepasst ist, dass sie dies erst bei einer vorbestimmten Mindeständerung tut, d.h. bei einer Änderung des Abstands, die einen vorbestimmten Betrag überschreitet, und/oder bei einer Änderung des Abstands über einen vorbestimmten Mindestzeitraum. Durch diese Maßnahmen kann das Risiko von Fehlalarmen weiter herabgesetzt werden, da geringfügige Abstandsänderungen bzw. kurze Störungen, die nicht durch ein Öffnen einer Tür hervorgerufen werden, keinen Wechsel im Zustand der Signalisierungseinrichtung nach sich ziehen. Alternativ oder zusätzlich kann es vorteilhaft sein, wenn die Steuereinrichtung so angepasst ist, dass sie nur auf eine Änderung anspricht, die einer Vergrößerung des Abstands oder einer Verkleinerung des Abstands entspricht.

Durch die Ausgestaltung gemäß dieser Ausführungsform kann zuverlässig und eindeutig festgestellt werden, ob eine Tür eines Flugzeugs geöffnet worden ist oder ob ein anderer nicht autorisierter Zugang zum Flugzeug stattgefunden hat. Dazu wird Die Anzeigeeinrichtung mit dem Sensor in der bereits beschriebenen Weise an einer von einer stationären Komponente, wie z.B. einem Bodenabschnitt, einem Wandabschnitt, einem Abschnitt einer Bordküche oder einem Abschnitt eines Monuments, im Innenraum eines Flugzeugs beabstandeten Tür des Flugzeugs in der Weise angeordnet bzw. befestigt, dass sich die stationäre Komponente im Erfassungsbereich des Sensors befindet und ein Öffnen der Tür eine Änderung des Abstands des Sensors von der stationären Komponente. Anschließend wird bei geschlossener Tür das erste Aktivierungssignal durch die Aktivierungseinrichtung bereitgestellt, um sicherzustellen, dass sich die Signalisierungseinrichtung zunächst im ersten Zustand befindet. Dann zeigt ein Wechsel der Signalisierungseinrichtung von dem ersten Zustand in den zweiten Zustand, der zu jeder Zeit durch Untersuchung der Signalisierungseinrichtung festgestellt werden kann, an, dass die Tür geöffnet worden ist. Zu diesem Zweck kann die Anzeigeeinrichtung eine Anzeige aufweisen, auf der ständig oder nach Benutzeranforderung dargestellt wird, ob sich die Signalisierungseinrichtung in ihrem zweiten Zustand befindet, oder eine optische Anzeige in Form von, z.B. einer Leuchtdiode. Es ist darauf hinzuweisen, dass es auch bei der erfindungsgemäßen Anzeige eine Situation geben kann, in der ein Wechsel der Signalisierungseinrichtung von dem ersten Zustand in den zweiten Zustand stattfindet, ohne dass die Tür geöffnet worden ist, nämlich wenn sich eine Person im Inneren des Flugzeugs durch den Erfassungsbereich des Sensors bewegt und dieser daher eine Abstandsänderung zu einem Objekt detektiert. Da die Signalisierungseinrichtung aber dazu vorgesehen ist, ein geparktes Flugzeug zu überwachen, an Bord dessen sich typischerweise keine Personen befinden, ist dies sogar hilfreich, da auch Ereignisse detektiert werden können, bei denen sich eine Person auf anderem Wege als durch die überwachte Tür Zutritt zum Flugzeug verschafft hat.

In dieser Ausführungsform bietet die Anzeigeeinrichtung den weiteren Vorteil, dass sie einmal in einem Flugzeug zur Überwachung einer Tür angeordnet werden und dann immer wieder verwendet werden kann, so dass ihre Verwendung sehr einfach ist und auf Dauer gesehen kostengünstig ist. Außerdem ist sie weniger sensitiv gegenüber Fehlalarmen und gegenüber Manipulation als Sicherheitssiegel.

In dieser Ausführungsform ist es allgemein möglich, dass die Reseteinrichtung und/oder die Aktivierungseinrichtung als Teil der Steuereinrichtung vorgesehen sind, d.h. durch die Steuereinrichtung gebildet werden bzw. in ihr implementiert sind, oder dass die Reseteinrichtung und/oder die Aktivierungseinrichtung als separate Komponenten vorgesehen sind. Es ist auch möglich, dass eine der beiden Einrichtungen als Teil der Steuereinrichtung und die andere als separate Komponente vorgesehen ist. Wenn die Reseteinrichtung oder die Aktivierungseinrichtung als separate Komponente vorgesehen ist, dann kann die jeweilige Einrichtung bevorzugt Teil derselben Elektronikeinheit wie die Steuereinrichtung sein oder aber auch auf einer separaten Elektronikeinheit vorgesehen sein.

In dieser Ausführungsform kann die Signalisierungseinrichtung bevorzugt eine nicht-volatile elektronische Speichereinrichtung aufweisen. Dabei entsprechen der erste Zustand und der zweite Zustand unterschiedlichen vorbestimmten Werten, die in einem vorbestimmten Speicherbereich der Speichereinrichtung gespeichert sind. Mit anderen Worten, existiert ein vorbestimmter Speicherbereich, in dem unterschiedliche Werte gespeichert werden können. Wenn in dem Speicherbereich ein oder mehrere erste vorbestimmte Werte gespeichert sind, befindet sich die Signalisierungseinrichtung in ihrem ersten Zustand, und wenn in dem Speicherbereich ein oder mehrere zweite vorbestimmte Werte gespeichert sind, befindet sich die Signalisierungseinrichtung in ihrem zweiten Zustand. Eine derartige Ausgestaltung der Signalisierungseinrichtung ist besonders einfach zu realisieren und besonders manipulationssicher.

Ist eine solche nicht-volatile elektronische Speichereinrichtung vorgesehen, kann die Signalisierungseinrichtung ferner eine optische Signaleinrichtung zum Abgeben eines optischen Signals und/oder eine akustische Signaleinrichtung zum Abgeben eines akustischen Signals aufweisen, die durch die bereits beschriebene optische Signaleinrichtung bzw. akustische Signaleinrichtung oder durch eine separate optische Signaleinrichtung bzw. akustische Signaleinrichtung gebildet werden können. Die Steuereinrichtung ist dann angepasst, um bei oder nach dem Versetzen der Signalisierungseinrichtung in den zweiten Zustand die optische Signaleinrichtung und/oder die akustische Signaleinrichtung zur Abgabe des optischen Signals bzw. des akustischen Signals zu betreiben. Insbesondere kann der zweite Zustand die Abgabe des optischen Signals und/oder des akustischen Signals aufweisen. Da der Speicherzustand der Speichereinrichtung nicht oder nicht ohne Weiteres von außen erkennbar ist, hat das Vorsehen einer optischen Signaleinrichtung und/oder einer akustischen Signaleinrichtung den Vorteil, dass ein Öffnen einer Tür unmittelbar sichtbar ist. Sollte die optische Signaleinrichtung und/oder die akustische Signaleinrichtung - beispielsweise aufgrund einer Erschöpfung oder Unterbrechung einer Energieversorgung oder einer Beschädigung der optischen Signaleinrichtung und/oder der akustischen Signaleinrichtung - ausfallen, kann der zweite Zustand immer noch durch Untersuchung des Speicherzustands der Speichereinrichtung festgestellt werden.

In der Ausführungsform, in der die Anzeigeeinrichtung auch zum Anzeigen eines nicht autorisierten Öffnens einer Tür eines am Boden geparkten, insbesondere unbeaufsichtigten, Flugzeugs angepasst ist, kann die Aktivierungseinrichtung bevorzugt einen Empfänger zum Empfang drahtloser Signale aufweisen und angepasst sein, um bei Empfang eines ersten vordefinierten drahtlosen Signals das Deaktivierungssignal und bei Empfang eines zweiten vordefinierten drahtlosen Signals das erste Aktivierungssignal bereitzustellen. Diese drahtlosen Signale können beispielsweise durch eine dedizierte Fernsteuerung abgegeben werden, ohne die eine Aktivierung und Deaktivierung nicht möglich ist. Um ein Abhören bzw. Abfangen der drahtlosen Signale zu erschweren, können drahtlose Signale geringer Reichweite verwendet werden, wie zum Beispiel NFC-Signale.

Dabei kann der Empfänger in einer besonders bevorzugten Variante ein RFID-Empfänger sein, und das erste und zweite vordefinierte drahtlose Signal sind dann durch einen RFID-Sender mit vordefinierter Kennung erzeugbar, der bevorzugt Teil eines Systems ist, das auch die Anzeigeeinrichtung enthält. Insbesondere können der RFID-Empfänger und der RFID-Sender gepaart sein, so dass das von dem RFID-Empfänger empfangene drahtlose Signal auf eine vorbestimmte, dem RFID-Sender zugeordnete Kennung hin untersucht wird und/oder der RFID-Empfänger erwartet, dass das von dem RFID-Sender ausgesandte drahtlose Signal mit einer vorbestimmten, dem RFID-Sender zugeordneten Verschlüsselung verschlüsselt ist, so dass der RFID-Empfänger die Authentizität des drahtlosen Signals bzw. seine Herkunft von dem RFID-Empfänger verifizieren kann. Zum Beispiel kann in dem RFID-Empfänger und dem RFID-Sender ein speziell diesen zugewiesenes Schlüsselpaar gespeichert sein. Unabhängig davon kann der RFID-Empfänger eine RFID-Leseeinrichtung sein, die durch ein ausgesandtes Abfragesignal Energie für den Betrieb des RFID-Senders bereitstellt, wenn sich dieser innerhalb eines vorbestimmten Abstands von dem RFID-Lesegerät befindet und der ein RFID-Etikett sein kann. Es reicht dann in vorteilhafter Weise, den RFID-Sender, der bevorzugt als tragbare Einheit ausgebildet ist, vorübergehend bzw. kurzzeitig in der Nähe der Anzeigeeinrichtung anzuordnen, um die Aktivierungseinrichtung zu betätigen, d.h. diese tragbare Einheit muss zur Aktivierung bzw. Deaktivierung lediglich von autorisiertem Personal an die Anzeigeeinrichtung gehalten werden. Zu diesem Zweck kann der RFID-Sender einen Schalter aufweisen, um festzulegen, ob das erste oder das zweite drahtlose Signal ausgesendet wird, oder das erste und das zweite drahtlose Signal können identisch sein und die Aktivierungseinrichtung wechselt bei jedem Empfang dieses Signals zwischen der Bereitstellung des Deaktivierungssignals und des ersten Aktivierungssignals. Alternativ wäre es auch möglich, dass die RFID-Leseeinrichtung der Anzeigeeinrichtung mit ihrem Abfragesignal Informationen darüber übermittelt, ob sich die Steuereinrichtung in der ersten Betriebsart oder in der zweiten Betriebsart befindet, und dass der RFID-Sender angepasst ist, um aus dem Abfragesignal die aktuelle Betriebsart zu ermitteln und in Abhängigkeit von der ermittelten Betriebsart das erste oder das zweite drahtlose Signal an die Aktivierungseinrichtung auszusenden, so dass ein Wechsel der Betriebsart stattfindet. Die letzteren beiden Optionen, die auf einen Schalter am RFID-Sender verzichten, sind besonders einfach in der Benutzung.

Alternativ dazu kann die Aktivierungseinrichtung einen Signaleingang zum drahtlosen oder drahtgebundenen Empfang externer Signale aufweisen und angepasst sein, um als Ausgangssignal das jeweils empfangene externe Signal bereitzustellen oder das Deaktivierungssignal bereitzustellen, wenn ein erstes vorbestimmtes externes Signal empfangen wird, und das erste Aktivierungssignal bereitzustellen, wenn ein zweites vorbestimmtes externes Signal empfangen wird. Im ersteren Fall wird das Deaktivierungssignal bzw. das erste Aktivierungssignal bereitgestellt, wenn es als externes Signal empfangen wird, d.h. extern erzeugt und einfach weitergeleitet. Der letztere Fall erlaubt dagegen den Anschluss an eine zentrale oder zugehörige separate Steuerung - beispielsweise über ein AFDX, CAN oder dergleichen oder eine andere Datenleitung die in einer Flugzeugtür vorhanden ist - und damit ggf. die Möglichkeit einer gleichzeitigen Aktivierung bzw. Deaktivierung mehrerer Anzeigeeinrichtungen. Die externen Signale können beispielsweise auch durch eine Codeeingabeeinrichtung erzeugt werden, oder die Codeeingabeeinrichtung kann Teil der Aktivierungseinrichtung sein.

In der Ausführungsform, in der die Anzeigeeinrichtung auch zum Anzeigen eines nicht autorisierten Öffnens einer Tür eines am Boden geparkten, insbesondere unbeaufsichtigten, Flugzeugs angepasst ist, kann die vorbestimmte Resetoperation bevorzugt der Empfang eines vordefinierten drahtlosen oder drahtgebundenen Resetsignals durch die Anzeigeeinrichtung sein. Diesbezüglich bestehen genau dieselben Möglichkeiten, wie sie oben für die Aktivierungseinrichtung beschrieben worden sind, d.h. die Resteinrichtung kann einen Empfänger zum Empfang drahtloser Signale aufweisen und insbesondere einen RFID-Empfänger, wobei der Empfänger bzw. RFID-Empfänger derselbe sein kann, wie er oben für die Aktivierungseinrichtung beschrieben worden ist, oder ein Empfänger mit denselben Eigenschaften, oder die Reseteinrichtung kann einen Signaleingang zum drahtlosen oder drahtgebundenen Empfang externer Signale aufweisen, für den dasselbe gilt, wie es für den Signaleingang der Aktivierungseinrichtung beschrieben worden ist.

In einer weiteren bevorzugten Ausführungsform, die als Alternative zu der Ausführungsform, in der die Anzeigeeinrichtung auch zum Anzeigen eines nicht autorisierten Öffnens einer Tür eines am Boden geparkten, insbesondere unbeaufsichtigten, Flugzeugs angepasst ist, oder in Kombination mit dieser vorgesehen sein kann, weist die Anzeigeeinrichtung sowohl die optische Signaleinrichtung als auch die akustische Signaleinrichtung auf. Genau wie in der Ausführungsform, in der die Anzeigeeinrichtung auch zum Anzeigen eines nicht autorisierten Öffnens einer Tür eines am Boden geparkten, insbesondere unbeaufsichtigten, Flugzeugs angepasst ist, weist die Anzeigeeinrichtung außerdem einen Sensor zum Erfassen eines Abstands zwischen dem Sensor und einem in einem Erfassungsbereich von zum Beispiel zwei bis fünf Meter vor dem Sensor befindlichen Objekt auf. Für diesen Sensor gilt genau dasselbe wie es ausführlich in Zusammenhang mit der Ausführungsform, in der die Anzeigeeinrichtung auch zum Anzeigen eines nicht autorisierten Öffnens einer Tür eines am Boden geparkten, insbesondere unbeaufsichtigten, Flugzeugs angepasst ist, erläutert worden ist. Werden beide Ausführungsformen kombiniert, kann ein und derselbe Sensor eingesetzt werden. In jedem Fall ist die Steuereinrichtung dazu eingerichtet, um bei Annäherung einer Person unter mindestens einen vorbestimmten Grenzabstand mindestens eine der optischen Signaleinrichtung und der akustischen Signaleinrichtung zu betreiben. Die Steuereinrichtung kann dabei in vorteilhafter Weise angepasst sein, um die optische Signaleinrichtung bei Annäherung einer Person unterhalb eines ersten Grenzabstands und die akustische Signaleinrichtung bei Annäherung einer Person unterhalb eines zweiten Grenzabstands zu betreiben, wobei der erste Grenzabstand größer als der zweite Grenzabstand ist. Nähert sich eine Person der Anzeigeeinrichtung, kann diese beispielsweise zunächst ein optisches Signal ausgeben, so dass die Person bereits bei einer recht großen Entfernung, das heißt deutlich mehr als eine Armlänge, bevorzugt höchstens 1,1 m, über diese Annäherung informiert wird, z.B. um - wie weiter unten näher erläutert wird - darauf hinzuweisen, dass eine Notrutsche aktiv ist. Unterschreitet die Person den zweiten Grenzabstand, der beispielsweise unterhalb einer oder eineinhalb Armlängen liegt, bevorzugt maximal 0,5 m, kann zusätzlich ein akustisches Signal abgegeben werden, welches die Person explizit z.B. darauf hinweist, dass beim Betätigen eines an der Tür vorgesehenen Griffs die Notrutsche ausgelöst wird.

Wenn die Steuereinrichtung angepasst ist, um bei Annäherung einer Person unter mindestens einen vorbestimmten Grenzabstand mindestens eine der optischen Signaleinrichtung und der akustischen Signaleinrichtung zu betreiben, kann diese Möglichkeit als dritte Betriebsart neben der oben erwähnten ersten Betriebsart und der oben erwähnten zweiten Betriebsart vorgesehen sein. Dann sind die beiden entsprechenden Ausführungsformen miteinander kombiniert, und die erste Betriebsart ist zum Beispiel eine Betriebsart, in der die Anzeigeeinrichtung insgesamt nicht aktiv ist. Ferner kann dabei auch vorgesehen sein, dass die dritte Betriebsart wahlweise zeitgleich mit der zweiten Betriebsart ausgeführt werden kann, d.h. dass in einer kombinierten Betriebsart die Steuereinrichtung angepasst ist, um sowohl bei einer Änderung des Abstands zwischen dem Sensor und einem Objekt die Signalisierungseinrichtung bis zur Vornahme der vorbestimmten Resetoperation in den zweiten Zustand zu versetzen als auch bei Annäherung einer Person unter mindestens einen vorbestimmten Grenzabstand mindestens eine der optischen Signaleinrichtung und der akustischen Signaleinrichtung zu betreiben. Die Steuereinrichtung ist dann bevorzugt ferner so ausgestaltet, dass zwischen allen verfügbaren Betriebsarten gewechselt werden kann, d.h. zwischen der ersten, zweiten und dritten Betriebsart und möglicherweise der kombinierten Betriebsart. Der Wechsel kann in derselben Weise stattfinden, wie er oben für den Wechsel zwischen erster und zweiter Betriebsart beschrieben worden ist. Beispielsweise können noch weitere entsprechende Aktivierungssignale vorgesehen sein, auf die die Steuereinrichtung entsprechend reagiert. Alternativ ist es auch möglich, dass die Steuereinrichtung in der zweiten Betriebsart angepasst ist, um bei Annäherung einer Person unter mindestens einen vorbestimmten Grenzabstand mindestens eine der optischen Signaleinrichtung und der akustischen Signaleinrichtung zu betreiben.

In den Ausführungsformen, in denen die Steuereinrichtung angepasst ist, um bei Annäherung einer Person unter mindestens einen vorbestimmten Grenzabstand mindestens eine der optischen Signaleinrichtung und der akustischen Signaleinrichtung zu betreiben, ist die Anzeigeeinrichtung auch zum Anzeigen eines Aktivierungsstatus einer Notrutsche in einem Flugzeug geeignet und angepasst. Zwar ist die Stellung eines Notrutschenentsicherungshebels oder eines anders ausgestalteten Betätigungselements zumeist optisch eindeutig erkennbar, und es sind - wie bereits erläutert - üblicherweise zusätzlich Warnleuchten in oder an der Flugzeugtür installiert, die eine optische Anzeige des Zustands der Notrutschenaktivierung ermöglichen. Dennoch kann es aufgrund von Zeitdruck und unvorhergesehenen Situationen an Bord des Flugzeugs gelegentlich passieren, dass nach erfolgter Landung der Notrutschenaktivierungshebel in dem "armed"-Zustand belassen wird und beim Öffnen einer Flugzeugtür eine Notrutsche versehentlich ausgelöst wird, was zu Schäden in der Nähe des Flugzeugs und zu hohen Folgekosten und unbestimmten Stillstandszeiten des Flugzeuges aufgrund der notwendigen Re-Integration der Notrutsche führt. Dies ist unabhängig vom Türaufbau und dem Flugzeughersteller. Es existieren Lösungen, die unbeabsichtigte Auslösung von Notrutschen zu verhindern, beispielsweise durch Einrichtungen, die eine Berührung eines Bauteils einer Flugzeugtür durch eine Person detektieren und eine optische und/oder akustische Warnung abgeben, wenn sich eine Person der Tür nähert oder den Griff berührt, wenn die Notrutschenauslöseeinrichtung mit der Flugzeugtür gekoppelt ist. Eine solche Lösung kann jedoch eine Modifikation der Flugzeugtür erfordern.

Durch die obigen Ausführungsformen, in denen die Steuereinrichtung angepasst ist, um bei Annäherung einer Person unter mindestens einen vorbestimmten Grenzabstand mindestens eine der optischen Signaleinrichtung und der akustischen Signaleinrichtung zu betreiben, kann in vorteilhafter Weise erreicht werden, dass eine wirkungsvolle Einrichtung zum Anzeigen eines Aktivierungsstatus einer und zum Verhindern einer unbeabsichtigten Auslösung einer Notrutsche bereitgestellt wird, die besonders zuverlässig und leicht nachrüstbar ist, wobei möglichst keine größeren Modifikationen innerhalb des betreffenden Flugzeugs und insbesondere an einer Tür erforderlich sind. Die optische Signaleinrichtung und/oder die akustische Signaleinrichtung dienen dann zum Erzeugen eines optisch wahrnehmbaren Signals bzw. eines akustisch wahrnehmbaren Signals, das einer Person anzeigt, dass beim Öffnen einer Tür des Flugzeugs eine Notrutsche ausgelöst wird.

In den Ausführungsformen, in denen die Steuereinrichtung angepasst ist, um bei Annäherung einer Person unter mindestens einen vorbestimmten Grenzabstand mindestens eine der optischen Signaleinrichtung und der akustischen Signaleinrichtung zu betreiben, ist der Sensor in jedem Fall in der Lage, eine Annäherung einer Person an den Sensor und somit an die ihn beherbergende Anzeigeeinrichtung festzustellen, so dass Kenntnis darüber erlangt werden kann, ob und/oder in welcher Entfernung sich eine Person vor dem Sensor befindet. Basierend auf von dem Sensor ermittelten Informationen ist die damit gekoppelte Steuereinrichtung in der Lage, selektiv die optische Signaleinrichtung und die akustische Signaleinrichtung zu betreiben. Konkret bedeutet dies, dass die Steuereinrichtung basierend auf der Entfernung einer Person von dem Sensor bzw. der Anzeigeeinrichtung ein optisches und/oder akustisches Warnsignal abgeben kann, durch das die Person darauf hingewiesen wird, dass beim Öffnen der Tür mit einer Auslösung der Notrutsche zu rechnen ist. Darüber hinaus ist die Anzeigevorrichtung bevorzugt so konfiguriert und ausgestaltet, dass wie bei herkömmlichen Warnleuchten durch die optische Signaleinrichtung ein Dauerlicht bzw. durch die akustische Signaleinrichtung ein Dauerwarnton erzeugt wird, sobald der Türöffnungshebel bei scharfer Notrutsche eine vorbestimmte Strecke in Richtung Tür-Öffnen bewegt wird. Zu diesem Zweck ist die Steuereinrichtung mit einem externen Detektor zur Detektion der Stellung des Türöffnungshebels verbunden.

Bei den obigen Ausführungsformen, in denen die Steuereinrichtung angepasst ist, um bei Annäherung einer Person unter mindestens einen vorbestimmten Grenzabstand mindestens eine der optischen Signaleinrichtung und der akustischen Signaleinrichtung zu betreiben, ist es ferner bevorzugt, wenn die Steuereinrichtung mindestens einen Aktivierungssignaleingang aufweist und dazu eingerichtet ist, um basierend auf einem über den Aktivierungssignaleingang empfangbaren zweiten Aktivierungssignal den Betrieb der optischen Signaleinrichtung und der akustischen Signaleinrichtung zu aktivieren oder zu unterbrechen. Die Steuereinrichtung kann auf diese Weise den Betrieb der optischen Signaleinrichtung und der akustischen Signaleinrichtung von dem Landezustand des Flugzeugs und/oder der Stellung eines an der betreffenden Tür befindlichen Notrutschenaktivierungshebels abhängig machen. Dies hat den Vorteil, dass eine entsprechende Überwachung lediglich bei gelandetem Flugzeug und in einer bestimmten Position stehendem Notrutschenaktivierungshebel vorgenommen wird, wenn die Gefahr besteht, dass ohne Deaktivierung des Notrutschenaktivierungshebels die Tür geöffnet wird. Bei regulärem Flugbetrieb hingegen kann auf eine Überwachung verzichtet werden, denn dort besteht nicht die Gefahr, dass eine Tür geöffnet wird. Ein zweites Aktivierungssignal, das von dem Landezustand des Flugzeugs abhängt, kann bei am Boden befindlichem Flugzeug von einer separaten Einrichtung generiert und an den Aktivierungssignaleingang übertragen werden. Ein weiteres zweites Aktivierungssignal, welches von der Stellung des Notrutschenaktivierungshebels abhängt, kann durch einen weiteren Sensor generiert werden, der in oder an dem Notrutschenaktivierungshebel angeordnet ist, die Stellung des Notrutschenaktivierungshebels überwacht und ein entsprechendes Signal an den mindestens einen Aktivierungssignaleingang überträgt. Dabei kann ein bereits am Notrutschenaktivierungshebel vorhandener Sensor verwendet werden, sofern sein Ausgangssignal für die Anzeigeeinrichtung nutzbar ist, oder durch einen dedizierten separaten, z.B. nachgerüsteten, Sensor. Es können auch mehrere unterschiedliche zweite Aktivierungssignale kombiniert werden, z.B. ein zweites Aktivierungssignal, das für den Landezustand kennzeichnend ist, und ein zweites Aktivierungssignal, das für die Stellung des Notrutschenaktivierungshebels kennzeichnend ist.

Ein zweites Aktivierungssignal, welches von dem Landezustand des Flugzeugs abhängt, kann von einem zentralen, bereits vorhandenen System des Flugzeugs generiert und ausgesendet werden. Es bietet sich in diesen Fällen an, die erfindungsgemäße Anzeigeeinrichtung hierfür über einen entsprechenden Bus oder ein Netzwerk mit dieser zentralen Einrichtung zu verbinden, beispielsweise über ein AFDX, CAN oder dergleichen. Es ist aber auch möglich, die Anzeigeeinrichtung an eine Quelle für diskrete bzw. logische Signale anzuschließen. Voraussetzung hierfür ist in allen Fällen, dass eine entsprechende Datenleitung bzw. Einzelleitung in der Tür vorhanden ist oder darin nachträglich integriert wird. Dafür könnte jedoch auch eine drahtlose Verbindungseinrichtung oder ein auf Basis der in die Tür reichenden Stromleitung realisiertes Datenübertragungssystem verwendet werden.

Es ist jedoch besonders bevorzugt, wenn die Inertialmesseinheit zur Generierung des zweiten Aktivierungssignals angepasst ist. Durch Verwendung eines G-Sensors und/oder mindestens eines Inertialsensors kann die Bewegung des Flugzeugs verfolgt werden, um hieraus schlusszufolgern, ob sich das Flugzeug am Boden oder im Flug befindet. Hierzu können verschiedene unterschiedliche Verfahren zum Einsatz kommen. Beispielsweise kann durch kontinuierliches Mitverfolgen der Bewegungen des Flugzeugs ein Flugprofil erfasst werden, welches aus einer Steigphase, einem Reiseflug mit einer oder mehreren Reiseflughöhen, einer Sinkphase und einer anschließenden Rollphase besteht, in der das Flugzeug stark abgebremst wird und eine Beschleunigung in Hochrichtung vernachlässigbar ist. Es wäre auch möglich, lediglich einen charakteristischen Landestoß festzustellen, der auf eine Sinkphase folgt, eine deutliche Verzögerung in Längsrichtung des Flugzeugs und/oder den obligatorischen Abbiegevorgang zu detektieren, der nach jeder Landung bei dem Wechsel von Landebahn zu Taxiway erfolgt. Die unterschiedlichen Verfahren können unterschiedliche Anordnungen mit unterschiedlich ausgestalteten G-Sensoren oder einer unterschiedlichen Anzahl von Inertialsensoren erfordern. Bei der Feststellung eines Landestoßes könnte etwa ein G-Sensor bzw. ein einzelner Inertialsensor ausreichen, der die Beschleunigung entlang der Hochachse des Flugzeugs erfasst. Allerdings bietet es sich - wie bereits oben in anderem Zusammenhang erwähnt - besonders an, kommerziell erhältliche und bevorzugt standardisierte Drei- bzw. Sechs-Achs-Sensoren einzusetzen, die sowohl statische Lagen, als auch dynamische Lageänderungen erfassen können und etwa mit je einem Drei-Achs-Drehraten- und Drei-Achs-Beschleunigungssensor auf einem Chip realisiert sind. Die Feststellung, ob sich das Flugzeug am Boden befindet, geht bei dieser Ausgestaltung folglich von der erfindungsgemäßen Anzeigeeinrichtung selbst aus. Eine möglicherweise in der Tür bzw. Türverkleidung nicht vorhandene Anbindung an einen Bus oder ein Netzwerk muss folglich nicht nachgerüstet werden, so dass die erfindungsgemäße Anzeigeeinrichtung sehr flexibel für unterschiedlichste Flugzeugtypen und Flugzeugtüren einsetzbar ist. Außerdem besteht der große Vorteil, dass die bereits vorhandene Intertialmesseinheit in Zusammenspiel mit der Steuereinrichtung unterschiedliche Funktionalitäten bereitstellt.

Wenn die Intertialmesseinheit zur Generierung des zweiten Aktivierungssignals angepasst ist, ist es weiter vorteilhaft, je nach Rumpfseite der entsprechenden Flugzeugtür die Anzeigeeinrichtung und/oder die Inertialmesseinheit mit einer Einrichtung zum Vorgeben einer Flugrichtung auszustatten, d.h. auf einer rechten oder linken Rumpfseite. Es bietet sich an, die erfindungsgemäße Anzeigeeinrichtung als stets gleiches Bauteil auszugestalten, das in viele verschiedene Flugzeugtüren integrierbar ist. Die in der Anzeigeeinrichtung integrierte Inertialmesseinheit kann demnach auf zwei unterschiedliche Arten zur Flugrichtung ausgerichtet werden. Die Installationsseite der Anzeigeeinrichtung muss daher zur Flugrichtung bekannt sein, um mit den von der Inertialmesseinheit gelieferten Signalen den Landezustand des Flugzeugs zuverlässig identifizieren zu können. Neben der Einstellung "ab Werk" durch entsprechende Firmware in der Steuereinrichtung kann sich auch anbieten, mit Hilfe von überbrückbaren Pins, d.h. einer Pin-Programmierung, an der Steuereinrichtung bei Installation der Anzeigeeinrichtung vorzugeben.

Sowohl in den Ausführungsformen, in denen die Anzeigeeinrichtung zum Anzeigen eines nicht autorisierten Öffnens einer Tür eines am Boden geparkten Flugzeugs angepasst ist, als auch in den Ausführungsformen, in denen die Steuereinrichtung angepasst ist, um bei Annäherung einer Person unter mindestens einen vorbestimmten Grenzabstand mindestens eine der optischen Signaleinrichtung und der akustischen Signaleinrichtung zu betreiben, ist der entsprechende Sensor zur Bestimmung eines Abstands bevorzugt angepasst, um den Abstand auf Basis der Laufzeit eines Signals zu erfassen, das von dem Sensor oder einer separaten Signalabgabeeinrichtung ausgesandt, von dem Objekt reflektiert und von dem Sensor empfangen wird. Zum Beispiel kann der Sensor insbesondere ein Ultraschallsensor sein. Dieser kann periodisch ein akustisches Signal im Ultraschallbereich abgeben, welches von im Erfassungs- bzw. Überwachungsbereich befindlichen Objekten reflektiert und zu dem Sensor zurückgeworfen wird. Aus der zeitlichen Differenz zwischen ausgesandtem und eintreffendem Signal kann die Entfernung des Objekts von dem Sensor ermittelt werden. Derartige Sensoren sind technisch ausgereift, kommerziell leicht erhältlich und kostengünstig. Zudem weisen Ultraschallsensoren ein vergleichsweise geringes Gewicht auf und erlauben dennoch eine präzise Messung und ein einstellbares Sensorverhalten. Unabhängig davon ist der Sensor bevorzugt in einem sichtseitennahen Bereich angeordnet, um ein ungestörtes Überwachen eines vor der Anzeigeeinrichtung und somit vor der Tür bzw. Türverkleidung im Innenraum des Flugzeugs gelegenen Erfassungs- bzw. Überwachungsbereichs zu ermöglichen. Dieser Erfassungsbereich wird als ein vor der Flugzeugtür liegender räumlicher Abschnitt oder als ein Flächenbereich eines vor der Tür bzw. Türverkleidung befindlichen Fußbodens durch Auswahl und Feineinstellung des Sensors definiert und erstreckt sich in den Innenraum des Flugzeugs, das heißt einem von der Türinnenseite bzw. Türverkleidung abgewandten Bereich. Um eine ungestörte Wahrnehmung des optischen Signals einer optischen Signaleinrichtung und ein ungestörtes Überwachen zu erlauben, können der Sensor und die jeweilige optische Signaleinrichtung nebeneinander oder übereinander an der Sichtseite angeordnet sein.

Nach der vorliegenden Erfindung ist ferner eine Türanordnung für ein Flugzeug vorgesehen, die ein Türblatt mit einer ersten Seite und einer gegenüberliegenden zweiten Seite aufweist, das angepasst ist, um in der Weise in einer Öffnung in einem Rumpf eines Flugzeugs montiert zu werden, dass es zwischen einer geschlossenen Position, in der es die Öffnung schließt und die erste Seite einem Innenraum des Flugzeugs zugewandt ist und die zweite Seite nach außen weist, und einer geöffneten Position bewegbar ist, in der die Öffnung zugänglich ist. Das Türblatt hat eine definierte Horizontalrichtung, d.h. eine definierte Richtung, die nach der Installation in einem Flugzeug so ausgerichtet sein soll, dass sie bei auf einer waagerechten Oberfläche befindlichem Flugzeug parallel zu dieser Oberfläche verläuft. Die Türanordnung weist ferner eine Anzeigeeinrichtung gemäß einer der oben erläuterten Ausführungsformen auf, die an dem Türblatt angeordnet ist, z.B. indem sie in einer Türverkleidung integriert oder an dieser befestigt ist.

Die Türanordnung weist ferner eine Notrutsche auf die einen eingefahrenen Zustand hat, aus dem sie wahlweise in einen ersten ausgefahrenen Zustand mit einer ersten Länge und einen zweiten ausgefahrenen Zustand mit einer zweiten, von der ersten Länge verschiedenen Länge ausfahrbar ist. Die Notrutsche kann mit dem Türblatt gekoppelt sein. Es ist aber auch möglich, dass die Notrutsche mit dem Flugzeugrumpf gekoppelt ist, indem sie zum Beispiel im Flugzeugrumpf unterhalb der jeweiligen Tür angebracht ist.

Außerdem weist die Türanordnung eine Notrutschen-Auslöseeinrichtung auf, die zum Beispiel Teil einer lokalen Türsteuereinrichtung sein kann, die verschiedene Funktionen der Tür steuert, und die angepasst ist, um das Ausfahren auszulösen, wenn das Türblatt aus der geschlossenen Position in Richtung auf die geöffnete Position bewegt wird und sich die Notrutsche in dem aktivierten Zustand befindet. Die Notrutschen-Auslöseeinrichtung weist ein Betätigungselement, wie z.B. einen Hebel, auf, das in einen ersten Betätigungszustand, in dem sich die Notrutsche in dem aktivierten Zustand befindet, und in einen zweiten Betätigungszustand bringbar ist, in dem sich die Notrutsche in dem deaktivierten Zustand befindet. Ferner hat sie einen Statussignalausgang, an dem das Statussignal ausgegeben wird und der mit dem Statussignaleingang der Anzeigeeinrichtung verbunden ist, und einen Neigungswinkel-Signaleingang, der mit dem Neigungswinkel-Signalausgang verbunden ist. Die Notrutschen-Auslöseeinrichtung ist angepasst, um beim Auslösen das Ausfahren der Notrutsche in der Weise zu steuern, dass die Notrutsche in den ersten ausgefahrenen Zustand ausgefahren wird, wenn an dem Neigungswinkel-Signaleingang das vorbestimmte Ausgangssignal nicht empfangen wird, und in den zweiten ausgefahrenen Zustand ausgefahren wird, wenn an dem Neigungswinkel-Signaleingang das vorbestimmte Ausgangssignal empfangen wird.

Nach der vorliegenden Erfindung ist ferner ein Flugzeug vorgesehen, das einen Rumpf, in dem eine Öffnung ausgebildet ist, und die oben beschriebene Türanordnung aufweist. Das Türblatt ist in der Weise in der Öffnung montiert, dass es zwischen einer geschlossenen Position, in der es die Öffnung schließt, die erste Seite einem Innenraum des Flugzeugs zugewandt ist, die zweite Seite nach außen weist und die Horizontalrichtung bei auf einer waagerechten Oberfläche befindlichem Flugzeug parallel zur Oberfläche verläuft, und einer geöffneten Position bewegbar ist, in der die Öffnung zugänglich ist.

In Ausführungsformen der Anzeigevorrichtung, in denen sie auch zum Anzeigen eines nicht autorisierten Öffnens einer Tür eines am Boden geparkten Flugzeugs angepasst ist, weist das Flugzeug eine stationäre Komponente, wie zum Beispiel einen Boden, einen Wandabschnitt, einen Abschnitt einer Bordküche oder einen Abschnitt eines Monuments, im Innenraum des Flugzeugs auf. Die stationäre Komponente ist von dem Türblatt beabstandet. Der Sensor ist an dem Türblatt, wie es oben in Bezug auf die Türanordnung erläutert worden ist, oder an der stationären Komponente in der Weise angeordnet, dass sich die stationäre Komponente bzw. das Türblatt im Erfassungsbereich des Sensors befindet und ein Öffnen des Türblatts eine Änderung des Abstands des Sensors von der stationären Komponente bzw. dem Türblatt bewirkt.

Im Folgenden wird ein Ausführungsbeispiel der Erfindung unter Bezugnahme auf die beigefügten Zeichnungen näher erläutert.
Figur 1 zeigt eine erfindungsgemäße Anzeigeeinrichtung in einer dreidimensionalen Ansicht.
Figur 2 zeigt eine mögliche Einbauposition der Anzeigeeinrichtung.
Figur 3 stellt die Anzeigeeinrichtung in einer Vier-SeitenAnsicht dar.
Figur 4 zeigt die Anzeigeeinrichtung in einer teilzerlegten Darstellung.
Figur 5 zeigt mögliche Schallkeulen eines Ultraschallsensors der Anzeigeeinrichtung.
Figur 6 zeigt eine mit der Anzeigevorrichtung ausgestattete Flugzeugtür während eines Öffnungsvorgangs.
Figur 7 zeigt eine vor der Flugzeugtür befindliche Person und eine ausgelösten Anzeige.
Figur 8 zeigt die Anzeigeeinrichtung in einer schematischen, blockbasierten Darstellung.
Figur 9a zeigt ein Flugzeug in horizontaler Lage mit einer ausgefahrenen Notrutsche.
Figur 9b zeigt das Flugzeug der Figur 9a in einer Lage, in der die Nase schräg nach oben gerichtet ist, und in der beide Stufen der Notrutsche ausgefahren sind.

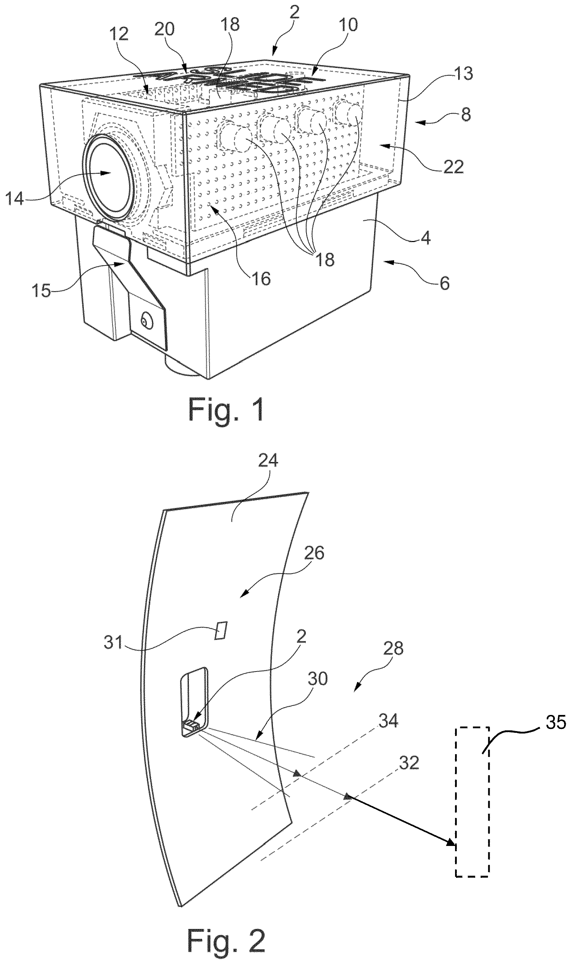

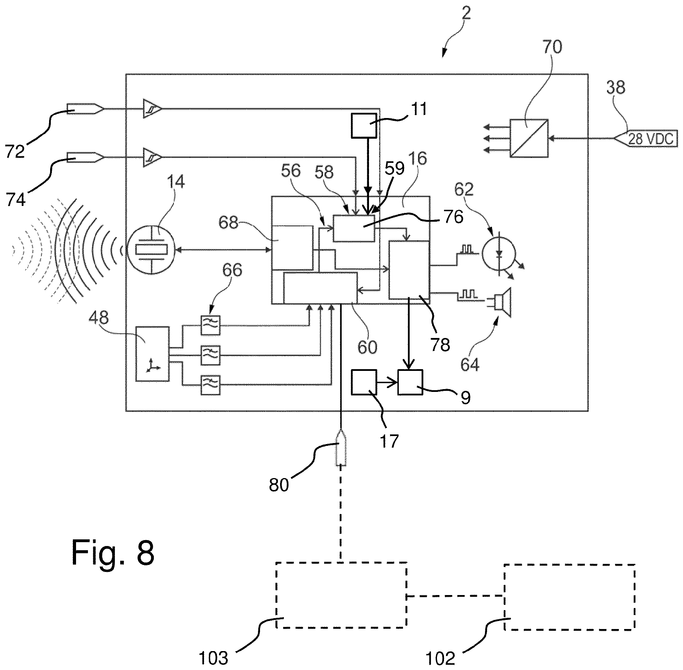

Figur 1 zeigt eine erfindungsgemäße Anzeigeeinrichtung 2, welche ein Gehäuse 4 mit einem Befestigungsbereich 6 und einer Sichtseite 8 aufweist. In der Anzeigeeinrichtung 2 ist eine in Figur 1 verdeckte Signalisierungseinrichtung in Form eines nicht-volatilen elektronischen Speichers 9 (siehe Figur 8), eine optische Signaleinrichtung 10, die exemplarisch mehrere Leuchteinrichtungen 18 aufweist, eine in Figur 1 verdeckte Aktivierungseinrichtung in Form eines RFID-Lesegeräts 11 (siehe Figur 8), eine in Figur 1 verdeckte und mit dem Speicher 9 verbundene Reseteinrichtung in Form eines weiteren RFID-Lesegeräts 17 (siehe Figur 8), eine in Figur 1 verdeckte akustische Signaleinrichtung 12 und ein Sensor 14 zum Erfassen des Abstands eines Objekts von der Anzeigeeinrichtung 2 angeordnet. Beispielhaft sind die optische Signaleinrichtung 10 und der Sensor 14 unter- bzw. nebeneinander, d.h. entlang einer Raumachse aufeinander folgend, an der Sichtseite 8 angeordnet, während die akustische Signaleinrichtung 12 beispielhaft im Innern der Anzeigeeinrichtung 2 von der Sichtseite 8 abgewandt positioniert ist. Der Befestigungsbereich 6 kann weiterhin elastische Halteklammern 15 aufweisen, die bei Einführung des Befestigungsbereichs 6 in eine entsprechende Öffnung einer Türverkleidung mit dieser eine form- und/oder kraftschlüssige Verbindung eingehen.

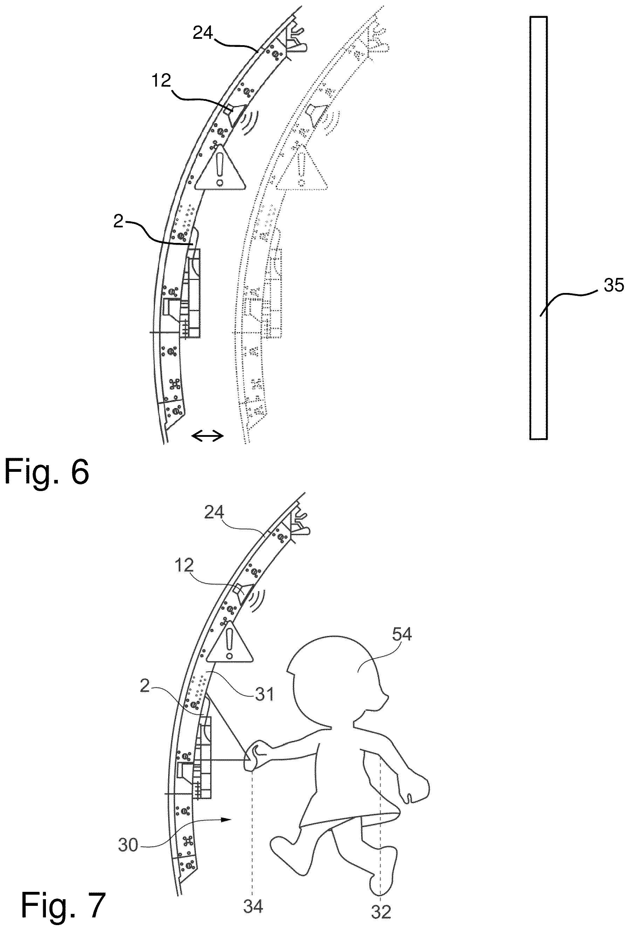

Eine weiterhin in der Anzeigeeinrichtung 2 angeordnete Steuereinrichtung in Form einer Elektronikeinheit 16, von der in dieser Darstellung insbesondere eine Platine erkennbar ist, ist mit dem Speicher 9, der optischen Signaleinrichtung 10, der Aktivierungseinrichtung 11, der akustischen Signaleinrichtung 12 und dem Sensor 14 verbunden und dazu eingerichtet, auf Basis eines erfassten Abstandes eines Objekts zu der Anzeigeeinrichtung 2 bzw. dem Sensor 14, in einer ersten Warnbetriebsart selektiv die optische Anzeigeeinrichtung 10 und die akustische Signaleinrichtung 12 zu betreiben und in einer zweiten Überwachungsbetriebsart einen Hinweis auf eine Änderung des Abstands in dem Speicher 9 zu speichern. Dies kann in der Warnbetriebsart beispielsweise durch Definieren mindestens eines in Figur 2 gezeigten Grenzabstands 32, 34 erreicht werden, den ein Objekt höchstens erreichen darf, so dass die optische Signaleinrichtung 10 bzw. die akustische Signaleinrichtung 12 betrieben werden. In der Überwachungsbetriebsart kann dies - wie weiter unten unter Bezugnahme auf die Figuren 2 und 6 erläutert werden wird - durch Definieren eines Betrags erreicht werden, um den sich der Abstand zu einem definierten Objekt höchstens ändern darf, bevor der Hinweis in dem Speicher 9 gespeichert wird.

Zum Wechsel zwischen den beiden Betriebsarten ist die Aktivierungseinrichtung 11 vorgesehen, die in dem Beispiel als RFID-Lesegerät ausgebildet ist. Sie ist so ausgestaltet und konfiguriert, dass sie in regelmäßigen Abständen ein drahtloses Abfragesignal mit einem ihr zugewiesenen Code aussendet und dass sie auf ein bestimmtes drahtloses Antwortsignal reagiert, das sie von einem passiven, durch das Abfragesignal mit Energie versorgten RFID-Etikett empfängt. Dieses RFID-Etikett, das zusammen mit der Anzeigeeinrichtung 2 ein System bildet, ist mit der Aktivierungseinrichtung 11 gepaart, d.h. so konfiguriert, dass es auf ein Abfragesignal mit dem Code der Aktivierungseinrichtung 11 mit der Aussendung eines Antwortsignals mit einem dem RFID-Etikett zugewiesenen Code reagiert. Die Aktivierungseinrichtung 11 untersucht das Antwortsignal daraufhin, ob es den Code des mit ihr gepaarten RFID-Etiketts enthält. Nur wenn dies der Fall ist, führt sie einen Wechsel der Betriebsart der Elektronikeinheit 16 herbei, indem sie ein erstes Aktivierungssignal als Ausgangssignal an einen Aktivierungssignaleingang 59 der Elektronikeinheit 16 sendet, wenn sie diese in der Warnbetriebsart befindet, und ein Deaktivierungssignal sendet, wenn sich die Elektronikeinheit 16 in der Überwachungsbetriebsart befindet (siehe Figur 8).

Die Elektronikeinheit 16 kann einen oder mehrere weitere Aktivierungssignaleingänge 56, 58 aufweisen, an den bzw. an die ein Aktivierungssignal gesendet werden kann. Dieses wird dazu eingesetzt, die Initiierung des Betriebs der optischen Signaleinrichtung 10 und der akustischen Signaleinrichtung 12 nur dann vorzunehmen, sobald sich das Flugzeug am Boden befindet und jederzeit die zugehörige Flugzeugtür geöffnet werden kann, d.h. die Warnbetriebsart nur in diesem Fall zu aktivieren.

Die optische Signaleinrichtung 10 ist in dem gezeigten Ausführungsbeispiel nur durch eine transparente Abdeckung 13 von der Sichtseite 8 getrennt oder in einem darin befindlichen Ausschnitt angeordnet, so dass eine uneingeschränkte Sichtbarkeit der optischen Signaleinrichtung 10, d.h. der Leuchteinrichtungen 18, erlaubt wird, die für eine Erzeugung eines ausreichend hellen Lichts, gepulst oder kontinuierlich, geeignet sind. Zudem weist die optische Signaleinrichtung 10 exemplarisch einen Schriftzug 20 auf ("Slide Armed"), der als einzige nicht lichtdurchlässige Fläche der optischen Signaleinrichtung 10 ausgeführt ist. Alternativ dazu kann der Schriftzug 20 auch als einzige Lichtdurchtrittsfläche der optischen Signaleinrichtung 10 realisiert werden.

Der Sensor 14 ist beispielhaft ein Ultraschallsensor, welcher periodisch Ultraschallsignale aussendet und aus der zeitlichen Differenz zwischen den ausgesandten Schallwellen und empfangenen Schallreflexionen die Entfernung zu dem betreffenden, vor dem Sensor befindlichen, Objekt bestimmt. Alternativ dazu können auch andere Arten von Sensoren eingesetzt werden, beispielhaft optische, kamerabasierte oder Radar-basierende Sensoren.

Die Anzeigeeinrichtung 2 ist als eine sehr kompakte Baueinheit ausgeführt, die anstelle einer üblichen Warnleuchte in einer Türverkleidung oder dergleichen einsetzbar ist. Wie vorangehend angedeutet bietet es sich an, um eine übermäßige Auslösung von Warnsignalen optischer oder akustischer Natur zu vermeiden, die optische Signaleinrichtung 10 und/oder die akustische Signaleinrichtung 12 nur dann zu betreiben, wenn sich das Flugzeug am Boden befindet und eine Öffnung der Flugzeugtür bevorsteht. Besonders einfach kann dies durch Empfangen eines Aktivierungssignals am Aktivierungssignaleingang 56, 58 realisiert werden, wozu jedoch eine Datenleitung oder eine Einzelleitung mit einem logischen Signal zu einer zentralen Einheit an Bord des Flugzeugs notwendig ist.

In die Anzeigeeinrichtung 2 ist eine hier verdeckte Beschleunigungsmesseinrichtung oder Trägheitsmesseinrichtung (Trägheitsplattform bzw. IMU) 22 (bzw. 48 in Figur 8) integriert, die dazu eingerichtet ist, die räumlichen Bewegungen des Flugzeugs zu erfassen und an die Elektronikeinheit 16 zu übertragen. Das Landen eines Flugzeugs kann durch prägnante Ereignisse festgestellt werden, beispielsweise einen Landestoß nach einem kontinuierlichen Sinkflug. Ist dieses Ereignis eingetreten, kann die Elektronikeinheit 16 die Annäherungsdetektion und dadurch gesteuerte optische bzw. akustische Warnungen vornehmen.

Insbesondere ist die Beschleunigungsmesseinrichtung oder Trägheitsmesseinrichtung auch dazu eingerichtet, um den Neigungswinkel der Anzeigeeinrichtung 2 um eine vorbestimmte Achse zu erfassen und an die Elektronikeinheit 16 zu übertragen, wobei die vorbestimmte Achse bei entsprechendem Einbau der Anzeigeeinrichtung 2 in die Tür 24 eines Flugzeugs der Nickachse des Flugzeugs entspricht.

Figur 2 zeigt beispielhaft eine Flugzeugtür 24 mit einer Türverkleidung 26, die zu dem Innern des Flugzeugrumpfes gewandt ist. Befindet sich das Flugzeug auf einer Rollbahn oder in einer Parkposition, wird die Tür 24 von der Innenseite des Flugzeugs geöffnet. Die Anzeigeeinrichtung 2 ist an oder in die Türverkleidung 26 integriert, wobei die Sichtseite 8 in das Innere des Flugzeugs gewandt ist.

Befindet sich folglich eine Person vor der Tür 24, ist diese in dem Erfassungsbereich des Sensors 14. Wie angedeutet, überwacht der Sensor 14 einen Raum 28 an der Innenseite des Flugzeugs und definiert dort einen Erfassungsbereich 30. Beispielsweise kann die Elektronikeinheit 16 einen ersten Grenzabstand 32 sowie einen zweiten Grenzabstand 34 definieren, wobei die Elektronikeinheit 16 die optische Signaleinrichtung 10 betreibt, sobald eine Person den ersten Grenzabstand 32 unterschreitet und wobei die akustische Signaleinrichtung 12 betrieben wird, sobald eine Person den zweiten Grenzabstand 34 unterschreitet. Für den ersten Grenzabstand 32 bietet es sich an, einen Abstand von höchstens 1,1 m und bevorzugt 0,9 m vorzusehen. Für den zweiten Grenzabstand 34 bietet sich ein Abstand von höchstens 0,5 m und bevorzugt 0,35 m an.

Befindet sich eine Person zwischen den beiden die Grenzabstände 32 und 34 andeutenden Linien, wird sie lediglich optisch, beispielsweise durch ein blinkendes Licht, auf die noch aktivierte Notrutsche aufmerksam gemacht. Nähert sich die Person weiter der Tür 24, folgt zusätzlich eine akustische Signalisierung, wenn der Abstand zu der Tür 24 in der Nähe einer Armlänge ist. Selbstverständlich können die beiden Grenzabstände 32 und 34 auch gleich sein, so dass eine optische und akustische Signalisierung gleichzeitig erfolgt. Schließlich ist bevorzugt vorgesehen, dass die Elektronikeinheit 16 die optische Signaleinrichtung 10 und die akustische Signaleinrichtung 12 betreibt, um ein Dauerlicht bzw. einen Dauerwarnton abzugeben, wenn der Türöffnungshebel eine vorbestimmte Strecke in Richtung Tür-Öffnen bewegt wird, während die Notrutsche aktiviert ist. Dazu ist die Elektronikeinheit 16 bevorzugt über einen weiteren Eingang mit einem Sensor verbunden, der die Stellung des Türöffnungshebels überwacht.

Ferner ist der Erfassungsbereich 30 des Sensors 14 so gewählt und ausgerichtet, dass er sich bei geschlossener Tür 24 eine stationäre Komponente 35 des Flugzeugs, wie zum Beispiel eine Wand eine Bordküche, in dem Erfassungsbereich 30 in einem definierten Abstand vom Sensor 14 befindet. Wenn sich die Elektronikeinheit 16 bei geschlossener Tür 24 in ihrer Überwachungsbetriebsart befindet, überwacht sie, ob sich der definierte Abstand um mehr als ein vordefinierter Grenzbetrag ändert. Sobald dies der Fall ist, ist es ein Hinweis auf eine Öffnung der Tür, die, wie aus Figur 6 ersichtlich ist, zu einer Vergrößerung des Abstands zwischen der Tür 24 und der stationären Komponente 35 führt. Dann wird durch die Elektronikeinheit ein Steuersignal an den Speicher 9 ausgegeben, das eine Speicherung eines ersten vorbestimmten Wertes in einer vorbestimmten Speicherstelle des Speichers 9 bewirkt. Dieser Wert zeigt an, dass ein Öffnen der Tür 24 stattgefunden hat, und kann nur durch die Reseteinrichtung 17 zurückgesetzt werden, die weiter untern unter Bezugnahme auf Figur 8 beschrieben wird. Wie oben erläutert worden ist, kann die Speicherung des ersten vorbestimmten Wertes auch dadurch bewirkt werden, dass sich eine nicht autorisierte Person auf anderem Wege Zutritt zum Flugzeug verschafft hat und sich durch den Erfassungsbereich 30 des Sensors 14 bewegt.

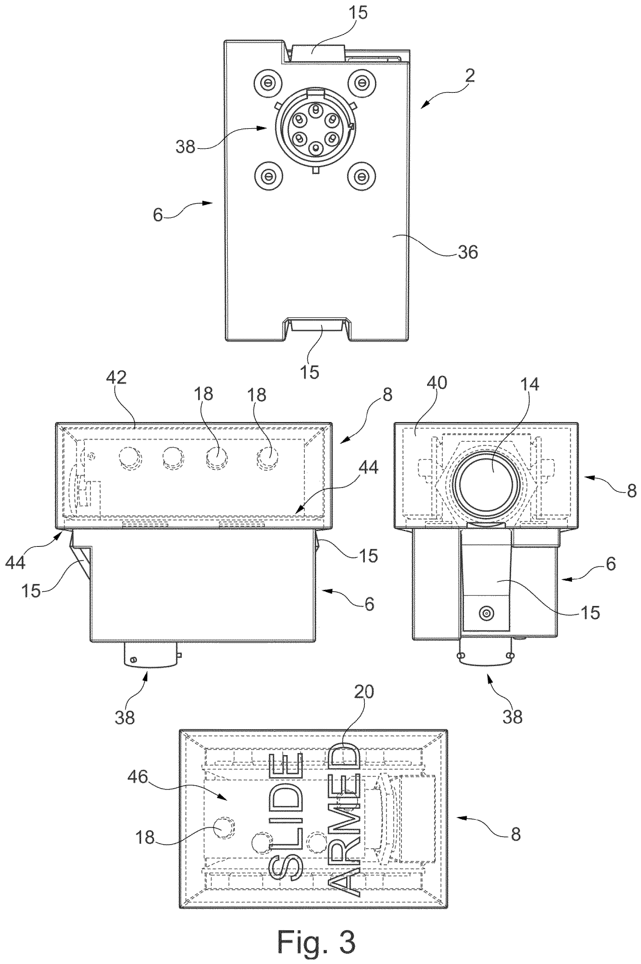

Figur 3 zeigt eine Vier-Seiten-Darstellung der Anzeigeeinrichtung 2, in der eine Unterseite 36 mit einem elektrischen Anschluss 38 gezeigt wird, der mit einer Stromversorgung der Tür 24 zu verbinden ist und weiterhin mit einem nicht dargestellten Sensor gekoppelt ist, der den Notrutschenaktivierungshebel 31 überwacht, und der auch, abhängig vom Flugzeugtyp, als abgehende Kabelpeitsche mit endseitig angeschlossenem Verbindungsstecker ausgeführt sein kann. Sowohl kann dies über ein Aktivierungssignal, das von der Stellung des Notrutschenaktivierungshebels 31 abhängt, als auch über eine von der Stellung des Notrutschenaktivierungshebels 31 abhängige Stromversorgung realisiert werden.

Ein schmales Ende 40 des Sichtbereichs 8 weist hauptsächlich den Sensor 14 auf, welcher bei in Figur 2 gezeigter Installation direkt in das Innere des Flugzeugrumpfs gerichtet ist. An einer Seitenwandung 42 sind die Leuchteinrichtungen 18 erkennbar, welche entlang der Seitenwandung 42 im Innern der Abdeckung 13 verteilt sind. Der Befestigungsbereich 6 ist schmaler als der Sichtbereich 8 gestaltet, so dass bei in einer Öffnung eingeschnappter Anzeigeeinrichtung 2 eine zu dem Befestigungs¬bereich 6 gewandte Kante 44 auf einem Rand der betreffenden Öffnung aufliegen kann und die Halteklammern 15 einen bündigen Kontakt der Kante 44 mit dem Rand der betreffenden Öffnung begünstigen.

Der Schriftzug 20 ist auf einer Oberseite 46 angeordnet und nimmt dort im Wesentlichen die zur Verfügung stehende Breite der Abdeckung 13 ein. Durch die Transparenz der Abdeckung 13sind weitere Leuchteinrichtungen 18 erkennbar, die den Schriftzug 20 hinterleuchten.

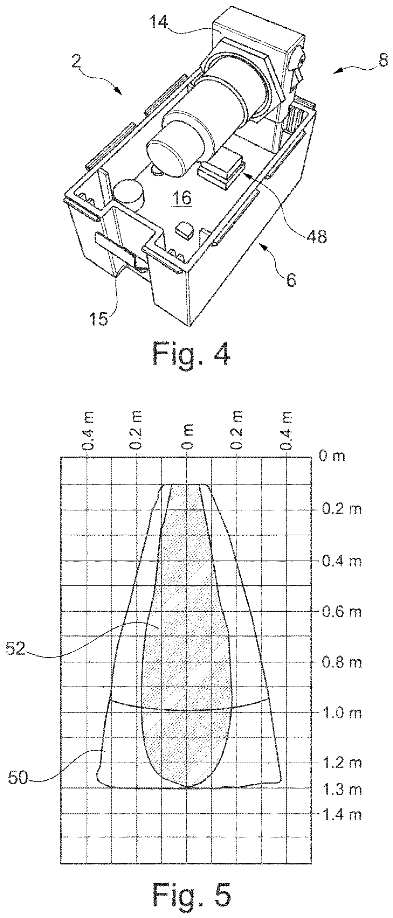

Figur 4 zeigt die Anzeigeeinrichtung 2 ferner in einer teilzerlegten Anordnung, wobei hier eine in der Elektronikeinheit 16 integrierte Beschleunigungsmesseinheit 48 erkennbar ist, die die Bewegung der Anzeigeeinrichtung 2 und damit des Flugzeugs erfassen kann. Durch Auswerten prägnanter Ereignisse, wie etwa eines Landestoßes und einer daraufhin erfolgten starken Verringerung der Längsgeschwindigkeit durch Bremsen kann eindeutig festgestellt werden, dass sich das Flugzeug am Boden befindet. Dieses Ereignis kann ein Aktivierungssignal auslösen, welches die Aktivierung der Annäherungsdetektion in dem Bereich vor der Tür 24 initiiert.

Ein Diagramm in Figur 5 zeigt ferner zwei bevorzugte Schallkeulen 50 und 52 des Ultraschallsensors 14, wobei die Schallkeule 50 zu einem Ultraschallsensor mit ausgerichteter Platte und die Schallkeule 52 zu einem Ultraschallsensor mit einem Rohr mit Durchmesser von beispielsweise 27 mm gehören. Für die präzise Erkennung einer Person direkt vor dem Ultraschallsensor, die auf die Tür 24 zuschreitet, und für die präzise Erkennung einer Abstandsänderung zu der stationären Komponente 35 sollte die Schallkeule möglichst schmal eingestellt sein, so dass eine Breite von deutlich unter einem Meter und bevorzugt von 0,3 bis 0,7 m erreicht wird. Der Erfassungsbereich 28 ist somit recht schmal und kann seitlich weiter entfernte Personen und Gegenstände ausblenden. Die Verwendung einer ausgerichteten Platte ermöglicht eine gegenüber der Lösung mit Rohr etwas verbreiterte Schallkeule 50.

In Figur 7 wird eine Person 54 dargestellt, die sich an die Tür 24 nähert und hierbei den ersten Grenzabstand 32 bereits überschritten hat und den zweiten Grenzabstand erreicht. Gleichzeitig werden eine optische Warnung und eine akustische Warnung ausgestoßen, so dass die Person 54 eindeutig davor gewarnt wird, mit in einer Aktivierungsstellung befindlichem Notrutschenaktivierungshebel 31 die Tür 24 zu öffnen.

Ferner zeigt Figur 8 ein Ausführungsbeispiel der Anzeigeeinrichtung 2 in einer schematischen, blockbasierten Darstellung. Der Ultraschallsensor 14 sowie die Beschleunigungsmesseinheit 48 sind mit der Elektronikeinheit 16 verbunden, welche überdies drei Aktivierungssignaleingänge 56, 58 und 59 an einem Logikbaustein 76 aufweist. Die Beschleunigungsmesseinheit 48 kann über eine entsprechende Logikschaltung 60 ein Aktivierungssignal erzeugen, welches eine erfolgte Landung repräsentiert, wobei das Aktivierungssignal in diesem Fall an den Aktivierungssignaleingang 56 gesandt wird. Ein weiteres Aktivierungssignal, das an einem mit einem Detektor für die Stellung eines Notrutschenaktivierungshebels verbundenen Anschluss 74 anliegt, kann an den zweiten Aktivierungssignaleingang 58 gesandt werden, das für eine Aktivierungsstellung des Notrutschenaktivierungshebels steht. Befindet sich das Flugzeug am Boden und ist der Notrutschenaktivierungshebel in einer Aktivierungsstellung, wird eine Überwachung des Erfassungsbereichs 30 initiiert. Wird in der Elektronikeinheit 16 festgestellt, dass sich ein Objekt innerhalb mindestens eines Grenzabstands 32, 34 befindet, wird über eine Ausgangssignalstufe 78 eine optische Signalisierung 62 und/oder eine akustische Signalisierung 64 ausgelöst. Das Aktivierungs- bzw. Deaktivierungssignal zum Wechsel zwischen den Betriebsarten kann, wie oben bereits erläutert worden ist, an den Aktivierungssignaleingang 59 gesandt werden.

Die Reseteinrichtung 17 ist mit dem Speicher 9 verbunden und ist, ähnlich wie die Aktivierungseinrichtung 11, als RFID-Lesegerät ausgebildet. Sie ist so ausgestaltet und konfiguriert, dass sie in regelmäßigen Abständen ein drahtloses Abfragesignal mit einem ihr zugewiesenen Code aussendet und dass sie auf ein bestimmtes drahtloses Antwortsignal reagiert, das sie von einem passiven, durch das Abfragesignal mit Energie versorgten RFID-Etikett empfängt. Dieses RFID-Etikett, das zusammen mit der Anzeigeeinrichtung 2 ein System bildet, ist mit der Reseteinrichtung 17 gepaart, d.h. so konfiguriert, dass es auf ein Abfragesignal mit dem Code der Reseteinrichtung 17 mit der Aussendung eines Antwortsignals mit einem dem RFID-Etikett zugewiesenen Code reagiert. Die Reseteinrichtung 17 untersucht das Antwortsignal daraufhin, ob es den Code des mit ihr gepaarten RFID-Etiketts enthält. Nur wenn dies der Fall ist, sendet sie ein Resetsignal an den Speicher 9, das dazu führt, dass der Speicher 9 einen von dem ersten vorbestimmten Wert verschiedenen zweiten vorbestimmten Wert in der vorbestimmten Speicherstelle speichert. Auf diese Weise wird der Speicher 9 für eine nächste Überwachung vorbereitet.

Es versteht sich, dass Filter 66 und 68 der Beschleunigungsmesseinheit 48 bzw. dem Ultraschallsensor 14 nachgeschaltet sind, um eine gewünschte Signalqualität zu erreichen. Eine Stromversorgungseinheit 70 ist ferner mit dem Anschluss 38 verbunden. Zusätzlich ist eine Pin-Programmierungs-Einheit 72 mit der Anzeigeeinrichtung verbunden oder darin integriert, um insbesondere die Ausrichtung der Anzeigeeinrichtung 2 relativ zu der Flugrichtung anzugeben.

Außerdem ist die Logikschaltung 60 so ausgestaltet, dass an einem mit ihr verbundenen Ausgangsanschluss 80 der Anzeigeeinrichtung 2 ein vorbestimmtes Ausgangssignal bereitgestellt wird, wenn die Beschleunigungsmesseinheit 48 einen Neigungswinkel um die vorbestimmte Achse feststellt, der für mindestens einen vorbestimmten Zeitraum einen vorbestimmten Neigungswinkel überschreitet. Eine Notrutschenauslöseeinrichtung 103 kann an den Ausgangsanschluss 80 angeschlossen werden und auf Basis des über diesen erhaltenen Signals die Ausfahrlänge einer Notrutsche 102 steuern.

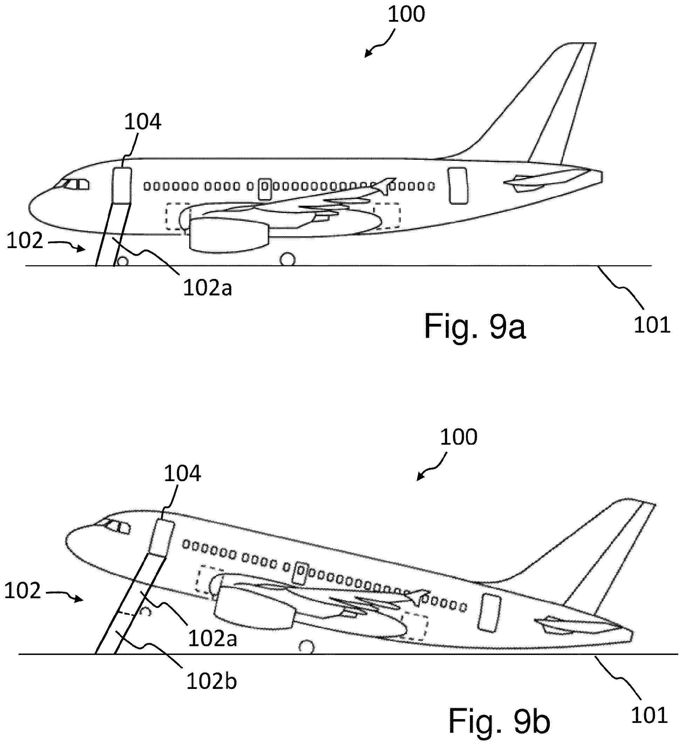

In den Figuren 9a und 9b ist ein gelandetes Flugzeug 100 in in Bezug auf den Boden 101 horizontaler Lage bzw. geneigter Lage, jeweils mit einer ausgefahrenen Notrutsche 102. Die geneigte Lage ist eine Nose-up-Lage, d.h. die Nase des Flugzeugs weist schräg nach oben. Die Notrutsche 102 weist zwei Ausfahrstufen 102a und 102b auf und kann zur Erzielung von zwei unterschiedlichen Ausfahrlängen entweder so angesteuert werden, dass nur die Stufe 102a ausgefahren oder dass beide Stufen 102a, 102b ausgefahren werden. Diese Steuerung der Notrutsche 102 erfolgt in der oben beschriebenen Weise durch die Notrutschenauslöseeinrichtung 103 (siehe Figur 8), die die Steuerung auf Basis des über den Ausgangsanschluss 80 erhaltenen Signals steuert.

In der horizontalen Lage der Figur 9a ist der Abstand zwischen der vorderen Tür bzw. Türanordnung 104 und dem Boden 101 geringer als in der geneigten Lage der Figur 9b. Daher wird im ersten Fall nur die erste Stufe 102a ausgefahren, und im zweiten Fall werden beide Stufen ausgefahren.

## Patentansprüche

1. Anzeigeeinrichtung zum Anzeigen eines Aktivierungsstatus einer Notrutsche in einem Flugzeug mit
- einer optischen Signaleinrichtung (10) zum Abgeben eines optischen Signals (62) und/oder einer akustischen Signaleinrichtung (12) zum Abgeben eines akustischen Signals,
- einem Statussignaleingang (74) zum Empfang eines vorbestimmten Statussignals, das den Aktivierungszustand einer Notrutsche kennzeichnet, wobei das Statussignal einen ersten Signalzustand, der einem aktivierten Zustand der Notrutsche zugeordnet ist, und einen zweiten Signalzustand aufweist, der einem deaktivierten Zustand der Notrutsche zugeordnet ist, und
- einer Steuereinrichtung (16), die mit der optischen Signaleinrichtung (10) bzw. der akustischen Signaleinrichtung (12) und dem Statussignaleingang (74) verbunden und dazu eingerichtet ist, um in Abhängigkeit von dem über den Statussignaleingang (74) empfangenen Statussignal die optische Signaleinrichtung (10) bzw. die akustische Signaleinrichtung (12) zu betreiben, um den Signalzustand des Statussignals anzuzeigen,
**dadurch gekennzeichnet, dass**
- die Anzeigeeinrichtung als eine zusammenhängende, kompakte Baueinheit ausgebildet ist, die an einer Tür (24, 26) einer Flugzeugtür angeordnet werden kann,
- die Anzeigeeinrichtung ferner eine mit der Steuereinrichtung (16) verbundene Neigungswinkel-Messeinrichtung (48) zur Bestimmung des Neigungswinkels der Anzeigeeinrichtung um eine vorbestimmte Achse und einen Neigungswinkel-Signalausgang (80) aufweist und
- die Steuereinrichtung (16) ferner dazu eingerichtet ist, um auf Basis des von der Neigungswinkel-Messeinrichtung bestimmten Neigungswinkel zu bestimmen, ob ein vorbestimmter Neigungswinkel um die vorbestimmte Achse für einen vorbestimmten Zeitraum überschritten worden ist, und über den Neigungswinkel-Signalausgang nur dann ein vorbestimmtes Ausgangssignal abzugeben, wenn der vorbestimmte Neigungswinkel für den vorbestimmten Zeitraum überschritten worden ist.

2. Anzeigeeinrichtung nach Anspruch 1, bei der die Neigungswinkel-Messeinrichtung (48) eine Inertialmesseinheit mit mindestens einem Inertialsensor zum kontinuierlichen oder periodischen Erfassen mindestens einer gerichteten Beschleunigung aufweist.

3. Anzeigeeinrichtung nach Anspruch 2, bei der
- einer von dem mindestens einen Inertialsensor angepasst ist, um die Drehbeschleunigung um die vorbestimmte Achse zu erfassen, und/oder
- der mindestens eine Inertialsensor drei Inertialsensoren umfasst, von denen jeder angepasst ist, um die Beschleunigung entlang einer anderen von drei unterschiedlichen Raumrichtungen zu erfassen.

4. Anzeigeeinrichtung nach einem der vorhergehenden Ansprüche, bei der der Neigungswinkel-Signalausgang (80) einen externen Anschluss der Anzeigeeinrichtung (2) zum Anschluss an eine externe Vorrichtung aufweist.

5. Anzeigeeinrichtung nach einem der vorhergehenden Ansprüche, bei der der Neigungswinkel-Signalausgang (80) mit der optischen Signaleinrichtung und/oder der akustischen Signaleinrichtung verbunden ist und die optische Signaleinrichtung bzw. die akustische Signaleinrichtung angepasst sind, um bei Empfang des vorbestimmten Ausgangssignals ein vorbestimmtes optisches Signal bzw. ein vorbestimmtes akustisches Signal abzugeben.

6. Anzeigeeinrichtung nach einem der vorhergehenden Ansprüche, bei der die Steuereinrichtung (16) so eingerichtet ist, dass der vorgestimmte Neigungswinkel und/oder der vorbestimmte Zeitraum einstellbar sind.

7. Anzeigeeinrichtung nach einem der vorhergehenden Ansprüche, die ferner einen Energieversorgungsanschluss zur Verbindung mit einer externen Energieversorgung und einen wiederaufladbaren Energiespeicher aufweist, der so angeordnet ist, dass er bei Betrieb der Anzeigeeinrichtung mit über den Energieversorgungsanschluss empfangener Energie aufgeladen wird und bei Ausfall der externen Energieversorgung zumindest die Steuereinrichtung und die Neigungswinkel-Messeinrichtung betreibt.

8. Anzeigeeinrichtung nach einem der vorhergehenden Ansprüche, bei der die Steuereinrichtung (16) ferner angepasst ist, um die Neigungswinkel-Messeinrichtung bei jedem Wechsel des an dem Statussignaleingang (74) empfangenen Statussignals von dem zweiten Signalzustand in den ersten Signalzustand und/oder von dem ersten Signalzustand in den zweiten Signalzustand auf einen Neigungswinkel um die vorbestimmte Achse von Null Grad zu kalibrieren.

9. Anzeigeeinrichtung nach einem der vorhergehenden Ansprüche, die ferner aufweist:
einen Sensor (14) zum Erfassen eines Abstands zwischen dem Sensor (14) und einem in einem Erfassungsbereich (30) vor dem Sensor (14) befindlichen Objekt,
eine Signalisierungseinrichtung (9), die einen ersten Zustand und einen zweiten Zustand aufweist,
eine mit der Signalisierungseinrichtung (9) gekoppelte Reseteinrichtung (17), die dazu eingerichtet ist, bei Vornahme einer vorbestimmten Resetoperation durch einen Benutzer die Signalisierungseinrichtung (9) in den ersten Zustand zu versetzen, und
einer Aktivierungseinrichtung (11), die dazu eingerichtet ist, als Ausgangssignal wahlweise ein vorbestimmtes Deaktivierungssignal und ein vorbestimmtes erstes Aktivierungssignal bereitzustellen,
wobei die Steuereinrichtung (16) mit dem Sensor (14), der Signalisierungseinrichtung (9) und der Aktivierungseinrichtung (11) gekoppelt und dazu eingerichtet ist, um
- bei Empfang des Deaktivierungssignals in eine erste Betriebsart zu wechseln und
- bei Empfang des ersten Aktivierungssignals in eine zweite Betriebsart zu wechseln, in der sie auf Basis eines von dem Sensor (14) gelieferten Sensorsignals, das für den Abstand zwischen dem Sensor (14) und dem Objekt charakteristisch ist, eine Änderung des Abstands zwischen dem Sensor (14) und dem Objekt detektiert und bei Detektion einer Änderung die Signalisierungseinrichtung (9) bis zur Vornahme der vorbestimmten Resetoperation in den zweiten Zustand versetzt,
so dass nach Anordnung der Anzeigeeinrichtung an einer von einer stationären Komponente (35) im Innenraum eines Flugzeugs beabstandeten Tür (24) des Flugzeugs in der Weise, dass sich die stationäre Komponente (35) im Erfassungsbereich (30) des Sensors (14) befindet und ein Öffnen der Tür (24) eine Änderung des Abstands des Sensors (14) von der stationären Komponente (35) bewirkt, und anschließender Bereitstellung des ersten Aktivierungssignals durch die Aktivierungseinrichtung (11) bei geschlossener Tür (24) ein Wechsel der Signalisierungseinrichtung (9) von dem ersten Zustand in den zweiten Zustand anzeigt, dass die Tür (24) geöffnet worden ist.

10. Anzeigeeinrichtung nach Anspruch 9, bei der die Signalisierungseinrichtung (9) eine nicht-volatile elektronische Speichereinrichtung aufweist und bei der der erste Zustand und der zweite Zustand unterschiedlichen vorbestimmten Werten entsprechen, die in einem vorbestimmten Speicherbereich der Speichereinrichtung gespeichert sind.

11. Anzeigeeinrichtung nach einem der vorhergehenden Ansprüche, die eine optische Signaleinrichtung (10) zum Abgeben eines optischen Signals (62) und eine akustische Signaleinrichtung (12) zum Abgeben eines akustischen Signals (64) aufweist, wobei die Steuereinrichtung (16) dazu eingerichtet ist, bei Annäherung einer Person (54) unter mindestens einen vorbestimmten Grenzabstand (32, 34) mindestens eine der optischen Signaleinrichtung (10) und der akustischen Signaleinrichtung (12) zu betreiben.

12. Anzeigeeinrichtung nach einem der Ansprüche 2 und 3 und nach Anspruch 11, bei der die Steuereinrichtung (16) dazu eingerichtet ist, um aus der erfassten mindestens einen gerichteten Beschleunigung festzustellen, ob sich das Flugzeug am Boden befindet, und um das Betreiben von mindestens einer der optischen Signaleinrichtung (10) und der akustischen Signaleinrichtung (12) nur dann vorzunehmen, wenn festgestellt worden ist, dass sich das Flugzeug am Boden befindet.

13. Anzeigeeinrichtung nach einem der vorhergehenden Ansprüche, die ferner ein Gehäuse (4) mit einem Befestigungsbereich (6) und einer Sichtseite (8) aufweist, wobei der Befestigungsbereich (6) dazu eingerichtet ist, eine mechanische Verbindung mit der Türverkleidung (26) oder einem Befestigungsmittel an der Flugzeugtür (24) einzugehen.

14. Türanordnung für ein Flugzeug, die aufweist:
- ein Türblatt (24) mit einer definierten Horizontalrichtung, einer ersten Seite und einer gegenüberliegenden zweiten Seite, das angepasst ist, um in der Weise in einer Öffnung in einem Rumpf eines Flugzeugs montiert zu werden, dass es zwischen einer geschlossenen Position, in der es die Öffnung schließt, die Horizontalrichtung bei auf einer waagerechten Oberfläche befindlichem Flugzeug parallel zur Oberfläche verläuft und die erste Seite einem Innenraum des Flugzeugs zugewandt ist und die zweite Seite nach außen weist, und einer geöffneten Position bewegbar ist, in der die Öffnung zugänglich ist,
- eine Anzeigeeinrichtung (2) nach einem der vorhergehenden Ansprüche, die an dem Türblatt (24) angeordnet ist,
- eine Notrutsche (102), die einen eingefahrenen Zustand aufweist, aus dem sie wahlweise in einen ersten ausgefahrenen Zustand mit einer ersten Länge und einen zweiten ausgefahrenen Zustand mit einer zweiten, von der ersten Länge verschiedenen Länge ausfahrbar ist,
- eine Notrutschen-Auslöseeinrichtung (103), die angepasst ist, um das Ausfahren auszulösen, wenn das Türblatt aus der geschlossenen Position in Richtung auf die geöffnete Position bewegt wird und sich die Notrutsche in dem aktivierten Zustand befindet, und die
- ein Betätigungselement, das in einen ersten Betätigungszustand, in dem sich die Notrutsche in dem aktivierten Zustand befindet, und in einen zweiten Betätigungszustand bringbar ist, in dem sich die Notrutsche in dem deaktivierten Zustand befindet,
- einen Statussignalausgang, an dem das Statussignal ausgegeben wird und der mit dem Statussignaleingang (74) verbunden ist, und
- einen Neigungswinkel-Signaleingang, der mit dem Neigungswinkel-Signalausgang verbunden ist, aufweist,
wobei die Notrutschen-Auslöseeinrichtung ferner angepasst ist, um beim Auslösen das Ausfahren der Notrutsche in der Weise zu steuern, dass die Notrutsche in den ersten ausgefahrenen Zustand ausgefahren wird, wenn an dem Neigungswinkel-Signaleingang das vorbestimmte Ausgangssignal nicht empfangen wird, und in den zweiten ausgefahrenen Zustand ausgefahren wird, wenn an dem Neigungswinkel-Signaleingang das vorbestimmte Ausgangssignal empfangen wird.

15. Flugzeug mit
einem Rumpf, in dem eine Öffnung ausgebildet ist, und
einer Türanordnung nach Anspruch 14, deren Türblatt (24) in der Weise in der Öffnung montiert ist, dass es zwischen einer geschlossenen Position, in der es die Öffnung schließt, die erste Seite einem Innenraum des Flugzeugs zugewandt ist, die zweite Seite nach außen weist und die Horizontalrichtung bei auf einer waagerechten Oberfläche befindlichem Flugzeug parallel zur Oberfläche verläuft, und einer geöffneten Position bewegbar ist, in der die Öffnung zugänglich ist.

## Claims

1. Display device for displaying an activation status of an emergency slide in an aircraft, having
- an optical signal device (10) for emitting an optical signal (62) and/or an acoustic signal device (12) for emitting an acoustic signal,
- a status signal input (74) for receiving a predetermined status signal which indicates the activation state of an emergency slide, wherein the status signal has a first signal state assigned to an activated state of the emergency slide and a second signal state assigned to a deactivated state of the emergency slide, and
- a control device (16) which is connected to the optical signal device (10) and/or to the acoustic signal device (12) and to the status signal input (74) and is set up to operate the optical signal device (10) and/or the acoustic signal device (12) on the basis of the status signal received via the status signal input (74) in order to display the signal state of the status signal,
**characterized in that**
- the display device is in the form of a cohesive compact structural unit which can be arranged on a door (24, 26) of an aircraft door,
- the display device also has an inclination angle measuring device (48), which is connected to the control device (16) and is intended to determine the inclination angle of the display device about a predetermined axis, and an inclination angle signal output (80), and
- the control device (16) is also set up to determine, on the basis of the inclination angle determined by the inclination angle measuring device, whether a predetermined inclination angle about the predetermined axis has been exceeded for a predetermined period and to emit a predetermined output signal via the inclination angle signal output only when the predetermined inclination angle has been exceeded for the predetermined period.

2. Display device according to Claim 1, in which the inclination angle measuring device (48) has an inertial measuring unit having at least one inertial sensor for continuously or periodically capturing at least one directed acceleration.

3. Display device according to Claim 2, in which
- one of the at least one inertial sensor is adapted to capture the rotational acceleration about the predetermined axis, and/or
- the at least one inertial sensor comprises three inertial sensors, each of which is adapted to capture the acceleration along another of three different spatial directions.

4. Display device according to one of the preceding claims, in which the inclination angle signal output (80) has an external connection of the display device (2) for connection to an external apparatus.

5. Display device according to one of the preceding claims, in which the inclination angle signal output (80) is connected to the optical signal device and/or to the acoustic signal device, and the optical signal device and the acoustic signal device are adapted to emit a predetermined optical signal and a predetermined acoustic signal when the predetermined output signal is received.

6. Display device according to one of the preceding claims, in which the control device (16) is set up in such a manner that the predetermined inclination angle and/or the predetermined period can be set.

7. Display device according to one of the preceding claims, which also has an energy supply connection for connection to an external energy supply and a rechargeable energy store which is arranged in such a manner that, during operation of the display device, it is charged with energy received via the energy supply connection and, if the external energy supply fails, operates at least the control device and the inclination angle measuring device.

8. Display device according to one of the preceding claims, in which the control device (16) is also adapted to calibrate the inclination angle measuring device to an inclination angle about the predetermined axis of zero degrees in the event of each change of the status signal received at the status signal input (74) from the second signal state to the first signal state and/or from the first signal state to the second signal state.

9. Display device according to one of the preceding claims, which also has:
a sensor (14) for capturing a distance between the sensor (14) and an object in a capture range (30) in front of the sensor (14),
a signalling device (9) which has a first state and a second state,
a reset device (17) which is coupled to the signalling device (9) and is set up to change the signalling device (9) to the first state if a predetermined reset operation is carried out by a user, and
an activation device (11) which is set up to selectively provide a predetermined deactivation signal and a predetermined first activation signal as the output signal,
wherein the control device (16) is coupled to the sensor (14), to the signalling device (9) and to the activation device (11) and is set up
- to change to a first operating mode if the deactivation signal is received, and
- to change to a second operating mode if the first activation signal is received, in which second operating mode the control device detects a change in the distance between the sensor (14) and the object, on the basis of a sensor signal which is provided by the sensor (14) and is characteristic of the distance between the sensor (14) and the object, and, if a change is detected, changes the signalling device (9) to the second state until the predetermined reset operation is carried out,
with the result that, after the display device has been arranged on a door (24) of the aircraft that is at a distance from a stationary component (35) in the interior of an aircraft in such a manner that the stationary component (35) is in the capture range (30) of the sensor (14) and opening of the door (24) changes the distance between the sensor (14) and the stationary component (35), and after the first activation signal has then been provided by the activation device (11) when the door (24) is closed, a change of the signalling device (9) from the first state to the second state indicates that the door (24) has been opened.

10. Display device according to Claim 9, in which the signalling device (9) has a non-volatile electronic memory device, and in which the first state and the second state correspond to different predetermined values which are stored in a predetermined memory area of the memory device.

11. Display device according to one of the preceding claims, which has an optical signal device (10) for emitting an optical signal (62) and an acoustic signal device (12) for emitting an acoustic signal (64), wherein the control device (16) is set up to operate at least one of the optical signal device (10) and the acoustic signal device (12) if a person (54) approaches to within at least a predetermined limit distance (32, 34).

12. Display device according to either of Claims 2 and 3 and according to Claim 11, in which the control device (16) is set up to determine, from the captured at least one directed acceleration, whether the aircraft is on the ground and to operate at least one of the optical signal device (10) and the acoustic signal device (12) only when it has been determined that the aircraft is on the ground.

13. Display device according to one of the preceding claims, which also has a housing (4) with a fastening region (6) and a visible side (8), wherein the fastening region (6) is set up to be mechanically connected to the door trim (26) or to a fastening means on the aircraft door (24).

14. Door arrangement for an aircraft, which has:
- a door leaf (24) having a defined horizontal direction, a first side and an opposite, second side, which door leaf is adapted to be mounted in an opening in a fuselage of an aircraft in such a manner that it can be moved between a closed position, in which it closes the opening, the horizontal direction, in the case of an aircraft on a horizontal surface, runs parallel to the surface and the first side faces an interior of the aircraft and the second side faces outwards, and an open position, in which the opening is accessible,
- a display device (2) according to one of the preceding claims, which is arranged on the door leaf (24),
- an emergency slide (102) which has a retracted state from which it can be selectively extended into a first extended state with a first length and a second extended state with a second length which differs from the first length,
- an emergency slide triggering device (103) which is adapted to trigger the extension when the door leaf is moved from the closed position in the direction of the open position and the emergency slide is in the activated state and which has
- an actuation element which can be changed into a first actuation state, in which the emergency slide is in the activated state, and a second actuation state, in which the emergency slide is in the deactivated state,
- a status signal output, at which the status signal is output and which is connected to the status signal input (74), and
- an inclination angle signal input which is connected to the inclination angle signal output,
wherein the emergency slide triggering device is also adapted to control the extension of the emergency slide in the event of triggering in such a manner that the emergency slide is extended into the first extended state when the predetermined output signal is not received at the inclination angle signal input and is extended into the second extended state when the predetermined output signal is received at the inclination angle signal input.

15. Aircraft having
a fuselage in which an opening is formed, and
a door arrangement according to Claim 14, the door leaf (24) of which is mounted in the opening in such a manner that it can be moved between a closed position, in which it closes the opening, the first side faces an interior of the aircraft, the second side faces outwards and the horizontal direction, in the case of an aircraft on a horizontal surface, runs parallel to the surface, and an open position, in which the opening is accessible.

## Revendications

1. Dispositif d'affichage destiné à afficher un état d'activation d'un toboggan de secours dans un aéronef, comportant
- un dispositif de signalisation optique (10) destiné à délivrer un signal optique (62) et/ou un dispositif de signalisation acoustique (12) destiné à délivrer un signal acoustique,
- une entrée de signal d'état (74) destinée à recevoir un signal d'état prédéterminé indiquant l'état d'activation d'un toboggan de secours, dans lequel le signal d'état présente un premier état de signal associé à un état activé du toboggan de secours et un second état de signal associé à un état désactivé du toboggan de secours ; et
- un dispositif de commande (16) relié au dispositif de signalisation optique (10) ou au dispositif de signalisation acoustique (12) et à l'entrée de signal d'état (74) et conçu pour faire fonctionner le dispositif optique (10) ou le dispositif acoustique (12) en fonction du signal d'état reçu par le dispositif de signalisation d'état, afin d'indiquer l'état de signal du signal d'état (74),
**caractérisé en ce que**
- le dispositif d'affichage est réalisé sous la forme d'un module compact continu qui peut être disposé sur une porte (24, 26) d'une porte d'aéronef,
- le dispositif d'affichage comporte en outre un dispositif de mesure d'angle d'inclinaison (48) relié au dispositif de commande (16) pour déterminer l'angle d'inclinaison du dispositif d'affichage autour d'un axe prédéterminé et une sortie (80) de signal d'angle d'inclinaison ; et
- le dispositif de commande (16) est en outre conçu pour déterminer, sur la base de l'angle d'inclinaison déterminé par le dispositif de mesure d'angle d'inclinaison, si un angle d'inclinaison prédéterminé autour de l'axe prédéterminé a été dépassé pendant une durée prédéterminée et pour ne délivrer un signal de sortie prédéterminé par l'intermédiaire de la sortie de signal d'angle d'inclinaison que si l'angle d'inclinaison prédéterminé a été dépassé pendant la période de temps prédéterminée.

2. Dispositif d'affichage selon la revendication 1, dans lequel le dispositif de mesure d'angle d'inclinaison (48) comporte une unité de mesure inertielle pourvue d'au moins un capteur inertiel pour détecter en continu ou périodiquement au moins une accélération dirigée.

3. Dispositif d'affichage selon la revendication 2, dans lequel
- l'un de l'au moins un capteur inertiel est apte à détecter une accélération de rotation autour de l'axe prédéterminé, et/ou
- l'au moins un capteur inertiel comprend trois capteurs inertiels dont chacun est apte à détecter une accélération suivant une autre de trois directions spatiales différentes.

4. Dispositif d'affichage selon l'une des revendications précédentes, dans lequel la sortie de signal d'angle d'inclinaison (80) comporte une borne externe du dispositif d'affichage (2) pour la connexion à un dispositif externe.

5. Dispositif d'affichage selon l'une des revendications précédentes, dans lequel la sortie de signal d'angle d'inclinaison (80) est reliée au dispositif de signalisation optique et/ou au dispositif de signalisation acoustique, et le dispositif de signalisation optique et/ou le dispositif de signalisation acoustique sont aptes à délivrer un signal optique prédéterminé ou un signal acoustique prédéterminé lors de la réception du signal de sortie prédéterminé.

6. Dispositif d'affichage selon l'une des revendications précédentes, dans lequel le dispositif de commande (16) est conçu de manière à ce que l'angle d'inclinaison prédéterminé et/ou la durée prédéterminée soient réglables.

7. Dispositif d'affichage selon l'une des revendications précédentes, comportant en outre une borne d'alimentation en énergie destinée à être reliée à une alimentation en énergie externe et un dispositif de stockage d'énergie rechargeable, qui est disposé de manière à ce qu'il soit chargé par l'énergie reçue par l'intermédiaire de la borne d'alimentation lors du fonctionnement du dispositif d'affichage et fait fonctionner au moins le dispositif de commande et le dispositif de mesure d'angle d'inclinaison en cas de défaillance de l'alimentation en énergie externe.

8. Dispositif d'affichage selon l'une des revendications précédentes, dans lequel le dispositif de commande (16) est en outre apte à étalonner le dispositif de mesure d'angle d'inclinaison chaque fois que le signal d'état reçu à l'entrée de signal d'état (74) passe du second état de signal au premier état de signal et/ou du premier état de signal au second état de signal, à un angle d'inclinaison de zéro degrés autour de l'axe prédéterminé.

9. Dispositif d'affichage selon l'une des revendications précédentes, comportant en outre :
un capteur (14) destiné à détecter une distance entre le capteur (14) et un objet situé dans une zone de détection (30) à l'avant du capteur (14),
un dispositif de signalisation (9) qui présente un premier état et un second état,
un dispositif de remise à zéro (17) couplé audit dispositif de signalisation (9), conçu pour ramener le dispositif de signalisation (9) dans ledit premier état lorsqu'un utilisateur effectue une opération de remise à zéro prédéterminée, et
un dispositif d'activation (11) conçu pour fournir sélectivement en tant que signal de sortie un signal de désactivation prédéterminé et un premier signal d'activation prédéterminé,
dans lequel le dispositif de commande (16) est couplé au capteur (14), au dispositif de signalisation (9) et au dispositif d'activation (11) et est conçu
- lorsque le signal de désactivation est reçu, pour passer à un premier mode de fonctionnement, et
- lorsque le premier signal d'activation est reçu, pour passer à un second mode de fonctionnement dans lequel il détecte, sur la base d'un signal de capteur délivré par le capteur (14) et caractéristique de la distance entre le capteur (14) et l'objet, une modification de la distance entre le capteur (14) et l'objet et, lors de la détection d'une modification, fait passer le dispositif de signalisation (9) dans le second état jusqu'à ce que l'opération de réinitialisant soit effectuée,
de manière à ce que, après que le dispositif d'affichage a été disposé sur une porte (24) d'un aéronef au niveau d'un composant stationnaire (35),
dans l'espace intérieur de l'aéronef de telle sorte que le composant stationnaire (35) se trouve dans la zone de détection (30) du capteur (14) et qu'une ouverture de la porte (24) provoque une modification de la distance entre le capteur (14) et le composant stationnaire (35), puis que le premier signal d'activation soit fourni par le dispositif d'activation (11) lorsque la porte (24) est refermée, un passage du dispositif de signalisation (9) du premier état au second état indique que la porte (24) a été ouverte.

10. Dispositif d'affichage selon la revendication 9, dans lequel le dispositif de signalisation (9) comprend un dispositif de mémoire électronique non volatile et dans lequel le premier état et le second état correspondent à des valeurs prédéterminées différentes stockées dans une zone de mémoire prédéterminée du dispositif de mémoire.

11. Dispositif d'affichage selon l'une des revendications précédentes, comportant un dispositif de signalisation optique (10) destiné à délivrer un signal optique (62) et un dispositif de signalisation acoustique (12) destiné à délivrer un signal acoustique (64),
dans lequel le dispositif de commande (16) est apte à faire fonctionner au moins l'un du dispositif de signalisation optique (10) et du dispositif de signalisation acoustique (12) lorsqu'une personne (54) s'approche à moins d'une distance limite prédéterminée (32, 34).

12. Dispositif d'affichage selon l'une des revendications 2 et 3 et selon la revendication 11, dans lequel le dispositif de commande (16) est conçu pour déterminer si l'aéronef est au sol à partir de l'au moins une accélération dirigée ayant été détectée et pour ne faire fonctionner au moins l'un du dispositif de signalisation optique (10) et du dispositif de signalisation acoustique (12) que s'il a été établi que l'aéronef se trouvait sur le sol.

13. Dispositif d'affichage selon l'une des revendications précédentes, comportant en outre un boîtier (4) présentant une zone de fixation (6) et un côté visible (8), dans lequel la zone de fixation (6) est conçue pour établir une liaison mécanique avec le revêtement de porte (26) ou avec un moyen de fixation à la porte d'aéronef (24).

14. Système de porte pour aéronef, comprenant :
- un battant de porte (24) présentant une direction horizontale définie, un premier côté et un second côté opposé, lequel battant de porte peut être monté dans une ouverture du fuselage d'un aéronef de telle manière qu'il puisse être déplacé entre une position fermée à laquelle il ferme ladite ouverture, à laquelle, lorsqu'un aéronef se trouve sur une surface horizontale, la direction horizontale s'étend parallèlement à ladite surface, et à laquelle le premier côté est orienté vers un espace intérieur de l'aéronef et le second côté est orienté vers l'extérieur, et une position ouverte à laquelle l'ouverture est accessible,
- un dispositif d'affichage (2) selon l'une des revendications précédentes, qui est disposé sur le battant de porte (24),
- un toboggan de secours (102) présentant un état rétracté à partir duquel il peut être sélectivement déployé dans un premier état déployé avec une première longueur et un second état déployé présentant une seconde longueur différente de la première longueur,
- un dispositif de déclenchement de toboggan de secours (103) qui est apte à déclencher le déploiement lorsque le battant de porte est déplacé de la position fermée à la position ouverte et que le toboggan de secours se trouve à l'état activé, et qui comprend
- un élément d'actionnement qui peut être amené dans un premier état de fonctionnement dans lequel le toboggan de secours est dans l'état activé, et dans un second état de fonctionnement dans lequel le toboggan de secours est dans l'état désactivé,
- une sortie de signal d'état sur laquelle le signal d'état est délivré et qui est reliée à l'entrée de signal d'état (74), et
- une entrée de signal d'angle d'inclinaison reliée à la sortie de signal d'angle d'inclinaison,
dans lequel le dispositif de déclenchement de toboggan de secours est en outre apte à commander, lors du déclenchement, le déploiement du toboggan de secours de manière à ce que le toboggan de secours soit déployé dans le premier état déployé lorsque le signal de sortie prédéterminé n'est pas reçu à l'entrée de signal d'angle d'inclinaison et son déploiement dans le second état déployé lorsque le signal de sortie prédéterminé est reçu à l'entrée de signal d'angle d'inclinaison.

15. Aéronef comportant
un fuselage dans lequel une ouverture est ménagée et un système de porte selon la revendication 14, dont le battant de porte (24) est monté dans l'ouverture de telle manière qu'il puisse être déplacé entre une position fermée à laquelle il ferme ladite ouverture, à laquelle le premier côté est orienté vers un espace intérieur de l'aéronef et le second côté est orienté vers l'extérieur et à laquelle, lorsqu'un aéronef se trouve sur une surface horizontale, la direction horizontale s'étend parallèlement à ladite surface, et une position ouverte à laquelle l'ouverture est accessible.
